# EUROPÄISCHE PATENTSCHRIFT

(11) **EP 3 814 658 B1**
(45) Veröffentlichungstag und Bekanntmachung des Hinweises auf die Patenterteilung: **01.05.2024**
(21) Anmeldenummer: 18738237.9
(22) Anmeldetag: 28.06.2018
(51) Int. Cl.: F16H 63/08, F16H 63/18, F16H 63/30, F16H 63/34

(54) **AKTUATORANORDNUNG UND ELEKTROANTRIEB MIT EINER SOLCHEN AKTUATORANORDNUNG**
ACTUATOR ARRANGEMENT AND ELECTRIC DRIVE WITH AN ACTUATOR ARRANGEMENT OF THIS KIND
AGENCEMENT D'ACTIONNEUR ET ENTRAÎNEMENT ÉLECTRIQUE COMPRENANT UN TEL AGENCEMENT D'ACTIONNEUR

(43) Veröffentlichungstag der Anmeldung: 05.05.2021
(73) Patentinhaber: GKN Automotive Limited, Birmingham, West Midlands B37 7YE (GB)
(72) Erfinder: SCHMIDT, Mark, 53639 Königswinter (DE); BROICHER, Simon, 50354 Hürth (DE)
(74) Vertreter: Neumann Müller Oberwalleney Patentanwälte PartG mbB
(86) Internationale Anmeldenummer: PCT/EP2018/067502
(87) Internationale Veröffentlichungsnummer: WO 2020/001778

(56) Entgegenhaltungen:
- EP-A1- 2 916 045
- EP-A2- 2 733 394
- WO-A1-2018/001476
- DE-A1-102015 008 709
- US-A1- 2007 272 511
- US-A1- 2009 193 931
- US-A1- 2012 115 665

## Beschreibung

Die Erfindung betrifft eine Aktuatoranordnung für einen Antriebsstrang eines Kraftfahrzeugs. Die Erfindung betrifft ferner einen Elektroantrieb zum Antreiben eines Kraftfahrzeugs mit einer solchen Aktuatoranordnung.

Generell werden Aktuatoren für eine Vielzahl von Funktionseinheiten in Antriebssträngen von Kraftfahrzeugen verwendet.

Es sind Aktuatoren für Parksperren bekannt, die in Antriebssträngen von Kraftfahrzeugen eingesetzt werden, um ein Antriebsbauteil im Antriebsstrang optional zu blockieren, so dass das Kraftfahrzeug an einem unbeabsichtigten Wegrollen gehindert wird, wenn die Antriebsquelle kein Drehmoment zur Verfügung stellt. Eine Parksperre kann ein mit einem Antriebsbauteil des Antriebsstrangs verbundenes Sperrenrad, ein mit dem Sperrenrad zusammenwirkendes Sperrelement, und einen Aktuator zum Betätigen des Sperrelements umfassen. Das Sperrelement kann durch entsprechende Betätigung des Aktuators in eine Schließposition überführt werden, in der das Sperrelement das Sperrenrad blockiert, und in eine Freigabeposition, in der das Sperrelement das Sperrenrad freigibt.

Es sind Aktuatoren für Kupplungen bekannt, die in Antriebssträngen von Kraftfahrzeugen eingesetzt werden, um eine Drehmomentübertragung selektiv herzustellen, zu unterbrechen oder auf einen gewünschten Wert einzustellen.

Es sind mehrachsgetriebene Kraftfahrzeuge mit einem ersten Antriebsstrang zum permanenten Antreiben einer ersten Antriebsachse sowie einem zweiten Antriebsstrang zum optionalen Antreiben einer zweiten Antriebsachse bekannt. Dabei werden unterschiedliche Antriebskonzepte unterschieden, beispielsweise Kraftfahrzeuge mit Frontmotor, bei denen die Vorderachse permanent angetrieben wird und die Hinterachse zuschaltbar ist. Weiter gibt es Kraftfahrzeuge mit Frontmotor, bei denen die Hinterachse permanent angetrieben ist und die Vorderachse zuschaltbar ist. Schließlich sind Kraftfahrzeuge mit Heckmotor bekannt, bei denen die Hinterachse permanent angetrieben ist und die Vorderachse bedarfsweise zugeschaltet wird.

Aus der EP 2 733 394 A2 ist eine Schaltungsanordnung mit einer Schaltkupplung und einer Parksperre bekannt. In einer ersten Ausführungsform ist eine Schaltungsanordnung mit einem hydraulischen oder elektromechanischen Aktuator vorgesehen, mit einem zwischen drei Positionen axial versetzbaren Aktuatorglied. Bei einer zweiten Ausführungsform weist die Aktuatoranordnung einen Elektromotor auf, dessen Motorwelle mit einem Motorzahnrad starr verbunden ist, und eine Schaltwalze, die starr mit einem Schaltwalzenzahnrad verbunden ist, das mit dem Motorzahnrad in Eingriff steht. Durch Verdrehen der Schaltwalze mittels des Elektromotors kann der Schaltstangenmitnehmer über die Schalwalzenkontur axial versetzt werden, und zwar von einer Neutralposition in eine Gangposition. Durch Drehen der Schaltwalze in die entgegengesetzte Richtung kann der Schaltstangenmitnehmer wieder in Neutralposition zurückgezogen werden. Zum Einlegen der Parksperrenposition wird der Schaltstangenmitnehmer mittels der Schaltwalzenkontur in axialer Richtung versetzt. Dabei entspricht die Parksperrenposition der Gangposition.

Aus der US 2007/272511 A1 ist eine Kraftübertragungsvorrichtung für ein Fahrzeug bekannt, mit einer Antriebsquelle, einem Kupplungsmechanismus zum Verbinden oder Trennen eines Leistungspfades zwischen der Antriebsquelle und einer Welle, einem Parksperrenmechanismus zum Sperren der Antriebswelle und einem Betätigungsmechanismus zum selektiven Betätigen des Kupplungsmechanismus und des Parkmechanismus. Der Kupplungsmechanismus wird über einen axial beweglichen Gabelschaft und eine Schaltgabel betätigt.

Aus der DE 10 2005 022 926 B3 ist eine Antriebseinheit für ein Kraftfahrzeug bekannt, mit einem elektrischen Motor, einem Wechselgetriebe mit wenigstens zwei Gangstufen und einem Differential. Der Motor treibt das Differential über eine Zwischenwelle an. Zur Betätigung der zwei Gangstufen ist eine Aktuatoranordnung vorgesehen, die eine drehend antreibbare Schaltwalze aufweist. Mittels der Schaltwalze wird eine Schaltmuffe betätigt, die eine erste Schaltkupplung oder alternativ eine zweite Schaltkupplung betätigt. Es ist ferner eine Parksperreneinrichtung vorgesehen, die koaxial zur Motorwelle angeordnet ist. Die Parksperreneinrichtung weist eine Sperrmuffe auf, die zwischen einer Freigabeposition und einer Sperrposition axial verschieblich gelagert ist. Die Sperrmuffe ist mittels der gleichen Aktuatoranordnung betätigbar, wie die Schaltkupplungen.

Aus der DE 10 2008 063 904 A1, entsprechend WO2010/078937 A1, ist eine Antriebsanordnung für ein mehrachsgetriebenes Kraftfahrzeug bekannt. Die Antriebsanordnung umfasst eine Differentialeinheit, eine steuerbare Zuschaltkupplung zum antriebsmäßigen Verbinden mit einer Antriebseinheit sowie eine Sperrkupplung zum Sperren der Ausgleichsbewegung des Differentials. Die beiden Kupplungen sind koaxial zueinander angeordnet und mittels einer Kugelrampenanordnung betätigbar. Nach einer Ausführungsform ist vorgesehen, dass zuerst die Sperrkupplung und dann die Zuschaltkupplung betätigt wird. Nach einer anderen Ausführungsform ist vorgesehen, dass erst die Zuschaltkupplung und dann die Sperrkupplung betätigt wird.

Der vorliegenden Erfindung liegt die Aufgabe zugrunde, eine multi-funktionale Aktuatoranordnung vorzuschlagen, die einfach und platzsparend aufgebaut ist. Eine weitere Aufgabe besteht darin, eine Antriebsstranganordnung mit einer solchen Aktuatoranordnung vorzuschlagen.

Zur Lösung wird eine Aktuatoranordnung zum Betätigen einer Kupplung und einer Parksperre in einem Antriebsstrang eines Kraftfahrzeugs vorgeschlagen, umfassend: eine Kupplung mit einem drehend antreibbaren Kupplungseingangsteil, einem Kupplungsausgangsteil und einem Kupplungsbetätigungsglied, das ausgestaltet ist, um das Kupplungseingangsteil und das Kupplungsausgangsteil miteinander antriebsmäßig zu verbinden oder voneinander zu trennen; eine Parksperre mit einem Sperrenrad, das mit einer Antriebswelle drehfest verbunden ist, die mit einem von dem Kupplungseingangsteil und Kupplungsausgangsteil antriebsverbunden ist, einem Sperrelement, das mit dem Sperrenrad zusammenwirkt und in eine Sperrposition überführbar ist, in der das Sperrelement das Sperrenrad blockiert, und in eine Freigabeposition, in der das Sperrelement das Sperrenrad freigibt, und einem Parksperrenbetätigungsglied zum Betätigen des Sperrelements; einen steuerbaren Aktuator mit einem bewegbaren Aktuator-Stellglied, das in mindestens drei Stellpositionen überführbar ist und mit dem Kupplungsbetätigungsglied und mit dem Parksperrenbetätigungsglied wirkverbunden ist, derart, dass in einer ersten Stellposition (S1) die Parksperre geschlossen ist, in einer zweiten Stellposition (S2) die Parksperre geöffnet und die Kupplung bereits geschlossen ist, und in einer dritten Stellposition (S0) die Kupplung und die Parksperre geöffnet sind, wobei das Aktuator-Stellglied eine Verzahnung aufweist, die mit einem drehend antreibbaren Ring zum Betätigen der Kupplung in Eingriff ist.

Ein Vorteil besteht darin, dass nur ein Aktuator zum Betätigen der Parksperre und der Kupplung erforderlich ist. Damit benötigt die vorgeschlagene Aktuatoranordnung nur eine geringe Anzahl von Bauteilen, was sich günstig auf den erforderlichen Bauraum und die Fertigungs- und Montagekosten auswirkt. Außerdem wird zusätzlich zur mechanischen Integration von Parksperren- und Kupplungsbetätigung entsprechend auch eine elektrische Integration erreicht, was sich aufgrund einer geringeren Anzahl von elektrischen Schnittstellen ebenfalls günstig auf die Zuverlässigkeit und Lebensdauer der Anordnung auswirkt.

Nach einer ersten Ausführungsform beziehungsweise nach einem ersten Funktionsprinzip der Aktuatoranordnung ist vorgesehen, dass die Kupplung in der ersten Stellposition (S1) des Aktuator-Stellglieds geöffnet ist. Dies bedeutet, dass zwischen der ersten Stellposition (S1), in welcher der Antriebsstrang durch die Parksperre blockiert ist, und der zweiten Stellposition (S2), in der der Antriebsstrang Drehmoment übertragen kann, eine ausgeprägte Neutralstellung vorgesehen ist, in der sowohl die Parksperre als auch die Kupplung offen sind. Das heißt, bevor die Kupplung sicher geschlossen werden kann, muss die Parksperre sicher offen sein. Die Dauer der Neutralstellung kann prinzipiell beliebig klein sein, das heißt größer oder gleich Null.

Nach einer zweiten Ausführungsform beziehungsweise nach einem zweiten Funktionsprinzip der Aktuatoranordnung ist vorgesehen, dass die Kupplung in der ersten Stellposition (S1) des Aktuator-Stellglieds geschlossen ist. Das bedeutet, dass zwischen der ersten Stellposition (S1), in welcher der Antriebsstrang durch die Parksperre blockiert ist, und der zweiten Stellposition (S2), in der der Antriebsstrang Drehmoment übertragen kann, keine Neutralstellung durchlaufen wird. Das heißt, die Kupplung kann bereits betätigt werden, während die Parksperre noch nicht vollständig offen ist. Diese Ausführung hat den Vorteil einer besonders schnellen Schaltgeschwindigkeit und damit schnellen Verfügbarkeit des Drehmoments im Antriebsstrang. Das Fahrzeug kann unmittelbar aus der Parkstellung heraus gestartet beziehungsweise beschleunigt werden.

Nach einer Ausführungsform kann das Kupplungsausgangsteil mit derselben Antriebswelle drehfest verbunden sein, mit der auch das Sperrenrad drehfest verbunden ist. Prinzipiell ist es jedoch auch möglich, dass das Sperrenrad mit einer anderen Welle im Antriebsstrang verbunden ist.

Das Aktuator-Stellglied kann über einen ersten Kraftübertragungsmechanismus mit dem Parksperrenbetätigungsglied verbunden sein und kann über einen zweiten Kraftübertragungsmechanismus mit dem Kupplungsbetätigungsglied verbunden sein. Ein vom Aktuator in das Stellglied eingeleitete Antriebsbewegung wird folglich auf zwei Leistungspfade aufgeteilt, nämlich einen ersten Leistungspfad zum Betätigen der Parksperre und einen zweiten Leistungspfad zum Betätigen der Kupplung. Dabei ist insbesondere vorgesehen, dass das Parksperrenbetätigungsglied von dem ersten Kraftübertragungsmechanismus über einen ersten Stellweg zum Betätigen der Parksperre bewegbar ist, und das Kupplungsbetätigungsglied von dem zweiten Kraftübertragungsmechanismus über einen zweiten Stellweg zum Betätigen der Kupplung bewegbar ist. Der erste und der zweite Stellweg sind vorzugsweise so aufeinander abgestimmt, beziehungsweise die Betätigungsglieder sind so gestaltet, dass bei Betätigung einer von den Einheiten Kupplung und Parksperre die jeweils andere Einheit eine definierte Position beibehält.

Der Aktuator zum Betätigen der Kupplung beziehungsweise Parksperre kann prinzipiell beliebig gestaltet sein. Es können elektromotorische, elektromagnetische, hydraulische oder pneumatische Aktuatoren zum Einsatz kommen, welche von einer elektronischen Regeleinheit nach Bedarf ansteuerbar sind. Der Aktuator kann nach einer Ausführungsform einen Drehantrieb aufweisen, beispielsweise einen Elektromotor, der das Aktuator-Stellglied in eine erste Drehrichtung und in eine entgegengesetzte zweite Drehrichtung drehend antreiben kann. Dabei können die Kraftübertragungsmechanismen so gestaltet sein, dass - jeweils ausgehend von einer Neutralstellung - bei Drehbewegung des Drehantriebs in der ersten Drehrichtung das Parksperrenbetätigungsglied betätigt wird, beispielsweise geschlossen, und bei Drehbewegung des Drehantriebs in der entgegengesetzten Drehrichtung das Kupplungsbetätigungsglied betätigt wird, beispielsweise geschlossen.

Das Aktuator-Stellglied weist eine Verzahnung auf, die mit einem drehend antreibbaren Ring zum Betätigen der Kupplung in Eingriff ist. Dabei kann das Aktuator-Stellglied insbesondere in Form eines Zwischenrads gestaltet ist, das im Leistungspfad zwischen dem Drehantrieb und der Kupplungsbetätigung angeordnet ist.

Nach einer möglichen Ausführungsform kann der erste Kraftübertragungsmechanismus für die Parksperre einen Spindeltrieb mit einer drehend antreibbaren Spindelwelle und einer hiermit verbundenen Spindelhülse sowie eine Koppelstange umfassen. Die Spindelwelle ist von dem Aktuator-Stellglied drehend antreibbar. Die Spindelhülse kann einen Schlitz mit einer Steigungskomponente aufweisen, in welcher die Koppelstange mit einem ersten Ende geführt ist, wobei ein zweites Ende der Koppelstange mit dem Parksperrenbetätigungsglied verbunden sein kann, so dass eine Drehbewegung der Spindelhülse zumindest mittelbar eine Verschiebebewegung des Parksperrenbetätigungsglieds bewirkt. Dabei kann die Verschiebung des Parksperrenbetätigungsglieds im Öffnungssinn der Parksperre aktiv mittels der Koppelstange erfolgen, insbesondere gegen die Vorspannkraft einer Feder. Bei Bewegen der Koppelstange in entgegengesetzter Richtung, das heißt im Schließsinn der Parksperre, wird das Parksperrenbetätigungsglied freigegeben und kann aktiv mittels der Feder verschoben werden.

Nach einer weiteren Ausführungsform kann der erste Kraftübertragungsmechanismus ein Konturelement mit einer Stellkontur umfassen, die ausgestaltet ist, eine Drehbewegung des Aktuator-Stellglieds in eine translatorische Bewegung des Parksperrenbetätigungsglieds umzuwandeln. Es ist insbesondere vorgesehen, dass das Parksperrenbetätigungsglied zumindest mittelbar an der Stellkontur abgestützt ist und durch Drehen der Stellkontur axial bewegbar ist. Die Stellkontur kann in einer Stirnseite des Konturelements ausgebildet sein; in diesem Fall ist das Parksperrenbetätigungsglied zumindest etwa parallel zur Drehachse des Konturelements ausgerichtet. Alternativ kann die Stellkontur auch in einer Umfangsfläche des Konturelements ausgebildet sein; in diesem Fall ist das Parksperrenbetätigungsglied zumindest etwa radial zur Drehachse des Konturelements orientiert.

Das Konturelement des ersten Kraftübertragungsmechanismus kann in einer Ausführungsform mit dem Aktuator-Stellglied fest verbunden sein, insbesondere einteilig mit diesem gestaltet sein. Alternativ kann das Konturelement auch mit dem Aktuator-Stellglied über eine Zwischenwelle antriebsverbunden sein. Dies schließt als eine erste Möglichkeit mit ein, dass das Konturelement drehfest mit der Zwischenwelle verbunden ist und gemeinsam mit dem Aktuator-Stellglied dreht. Nach einer zweiten Möglichkeit kann das Konturelement auch als Zahnstange gestaltet sein, die mit der Zwischenwelle in Eingriff ist und entsprechend bei Drehung des Aktuator-Stellglieds translatorisch bewegt wird. Dabei bewirkt eine Drehung in der ersten Drehrichtung eine Verschiebebewegung in eine erste Schieberichtung und entsprechend eine Drehung in entgegengesetzter Drehrichtung eine Verschiebebewegung in entgegengesetzter Schieberichtung. Die Zahnstange hat an ihrer Rückseite eine Stellkontur mit variabler Höhe über der Länge. Durch Verschieben der Zahnstange wird das an der Stellkontur abgestützte Parksperrenbetätigungsglied entsprechend auf die Sperrklinke zu oder von dieser weg bewegt. Zwischen der Stellkontur des Konturelements und dem Betätigungsglied kann eine Rolle vorgesehen sein, über welche die Axialkraft vom Konturelement auf das Betätigungsglied übertragen wird.

Nach einer weiteren Ausführungsform kann der erste Kraftübertragungsmechanismus einen Winkeltrieb mit einer drehend antreibbaren Betätigungswelle und einer hiermit antriebsverbundenen Parksperrenwelle aufweisen, auf der das Parksperrenbetätigungsglied angeordnet ist, derart, dass das Parksperrenbetätigungsglied durch Rotation der Parksperrenwelle axial bewegbar ist. Die Betätigungswelle ist drehfest mit dem Aktuator-Stellglied verbunden beziehungsweise wird von diesem angetrieben. Auf der Betätigungswelle kann eine Mutter angeordnet sein, die bei Rotation der Welle axial bewegt wird und gegen die das Parksperrenbetätigungsglied abgestützt ist.

Nach einer weiteren Ausführungsform kann der erste Kraftübertragungsmechanismus einen Spindeltrieb mit einer drehend antreibbaren Spindelwelle und einer hiermit verbundenen Spindelmutter umfassen, gegen die das Parksperrenbetätigungsglied zumindest mittelbar abgestützt ist. Die Spindelwelle wird vom Aktuator-Stellglied angetrieben, was auch mittelbar unter Zwischenschaltung weiterer Antriebselemente erfolgen kann. Beispielsweise kann eine Übertragung der Drehbewegung von dem Aktuator-Stellglied über einen hiermit in Verzahnungseingriff befindlichen Ring und gegebenenfalls ein mit dem Ring kämmendes Zwischenrad auf die Spindelwelle übertragen werden. Dabei bewirkt eine Drehbewegung des Aktuator-Stellglieds in eine erste Drehrichtung eine entsprechende Drehung der Spindelwelle und Verschiebebewegung des Parksperrenbetätigungsglieds in eine erste Betätigungsrichtung. Bei Drehung des Aktuator-Stellglieds in entgegengesetzter zweiter Drehrichtung bewirkt entsprechend eine Verschiebebewegung des Parksperrenbetätigungsglieds in eine zweite Betätigungsrichtung. Das Parksperrenbetätigungsglied kann gegen eine auf der Spindelwelle anordneten Spindelmutter axial abgestützt sein.

Nach einer weiteren Ausführungsform kann der erste Kraftübertragungsmechanismus eine Stellhülse umfassen, die von dem Aktuator-Stellglied zumindest mittelbar drehend antreibbar ist, und ein mit dem Parksperrenbetätigungsglied verbundenes Koppelelement. Die Stellhülse kann auch als Schaltwalze bezeichnet werden. Dabei ist insbesondere vorgesehen, dass eines von den beiden Teilen Stellhülse und Koppelelement eine Stellkontur aufweist, die mit einer Gegenkontur von dem anderen der beiden Teile derart zusammenwirkt, dass eine Drehbewegung der Stellhülse eine Verschiebebewegung des Parksperrenbetätigungsglieds bewirkt.

Nach einer weiteren Ausführungsform kann der erste Kraftübertragungsmechanismus eine Koppelstange aufweisen, gegen die das Parksperrenbetätigungsglied zumindest mittelbar abgestützt ist, wobei die Koppelstange mittels einer Feder in Richtung der Stellkontur beaufschlagt und gegen diese abgestützt ist. Dabei ist die Stellkontur vorzugsweise so gestaltet, dass durch Drehen des Aktuator-Stellglieds die Koppelstange in Bezug auf die Drehachse des Aktuator-Stellglieds radial bewegt wird.

Der zweite Kraftübertragungsmechanismus, welcher der Kupplung zugeordnet ist, umfasst vorzugsweise eine Rampenanordnung, welche ausgestaltet ist, eine Drehbewegung des Aktuator-Stellglieds in eine translatorische Bewegung des Kupplungsbetätigungsglieds umzuwandeln. Die Rampenanordnung kann einen Stützring aufweisen, der gegenüber einem ortsfesten Bauteil axial abgestützt ist, und einen Stellring, der gegenüber dem Stützring axial verschiebbar ist. Dabei kann der Stellring das Kupplungsbetätigungsglied bilden beziehungsweise einteilig mit diesem gestaltet sein. (alle Figuren) Der axial abgestützte Stützring kann von dem Aktuator-Stellglied drehend angetrieben werden, wobei der axial bewegliche Stellring in diesem Fall drehfest geführt ist. Die Rampenanordnung kann auch in Form einer Kugelrampenanordnung gestaltet sein, wobei der Stützring und der Stellring über Kugeln, die in über den Umfang tiefenveränderlichen Rillen der Ringe laufen, gegeneinander abgestützt sind. Auch eine Ausführungsform nach dem Schiebemuffenprinzip ist zur Umsetzung einer Drehbewegung in eine Verschiebebewegung ebenso möglich.

Für alle der genannten Ausführungsformen gilt, dass diese ein elastisch vorgespanntes Fixierelement aufweisen können, das ausgestaltet ist, um das Aktuator-Stellglied in zumindest einer Stellposition zu fixieren.

Es kann ein Positionssensor vorgesehen sein, der ausgestaltet ist, um eine die Position des Aktuator-Stellglied repräsentierende Messgröße zu erfassen. Vom Positionssensor erfasste Sensordaten können an eine elektronische Regeleinheit zur Steuerung des Aktuators weitergegeben werden. Auf diese Weise wird eine zuverlässige, präzise und schnelle Steuerung ermöglicht.

Die Kupplung kann prinzipiell beliebig gestaltet sein und jede Kupplung umfassen, mit der eine Drehmomentübertragung im Antriebsstrang eines Kraftfahrzeugs wahlweise hergestellt oder unterbrochen werden kann. Beispielsweise kann eine formschlüssige Kupplung verwendet werden. Eine formschlüssige Kupplung umfasst zumindest zwei Kupplungsteile, die in geschlossenem Zustand zur Übertragung eines Drehmoments formschlüssig ineinandergreifen und in geöffnetem Zustand außer Eingriff sind, beispielsweise eine Zahnkupplung oder eine Klauenkupplung. Alternativ kann auch eine Reibungskupplung verwendet werden, insbesondere eine Reiblamellenkupplung.

Die Kupplung weist vorzugsweise zwei Kupplungsteile auf, von denen eines mit der Antriebswelle drehfest verbunden und ein zweites Kupplungsteil mit einem zweiten Antriebsteil drehfest verbunden ist. Eines der beiden Kupplungsteile ist an einem ortsfesten Bauteil axial abgestützt, während das andere Kupplungsteil axial verschiebbar ist. Die Kupplung kann wahlweise in eine geschlossene Position überführt werden, in der die beiden Wellen miteinander zur Übertragung eines Drehmoments antriebsverbunden sind, und in eine geöffnete Position, in der die beiden Wellen voneinander entkoppelt sind.

Nach einer bevorzugten Ausgestaltung ist eine Rückstellfeder vorgesehen, welche die Kupplung im Schließsinn beaufschlagt. Grundsätzlich ist jedoch auch eine umgekehrte Ausgestaltung denkbar, bei der die Rückstellfeder im Öffnungssinn der Kupplung wirksam ist. In diesem Fall würde die Betätigungsvorrichtung ebenfalls in entsprechend umgekehrter Richtung wirken, das heißt entgegen der Federkraft.

Die Aufgabe wird weiter gelöst durch eine Elektroantriebsanordnung zum Antreiben eines Kraftfahrzeugs, umfassend: eine elektrische Maschine mit einer Motorwelle; ein Untersetzungsgetriebe, das ausgestaltet ist, um ein von der Motorwelle eingeleitetes Drehmoment ins Langsame zu übersetzen; eine Leistungsverzweigungseinheit mit einem Eingangsteil und zwei Ausgangsteilen, wobei die Leistungsverzweigungseinheit ausgestaltet ist, um eine vom Untersetzungsgetriebe eingeleitete Drehbewegung auf die zwei Ausgangsteile zu übertragen; wobei eine Aktuatoranordnung vorgesehen ist die eine oder mehrere der oben genannten Ausgestaltungen haben kann und die insbesondere im Leistungspfad des Untersetzungsgetriebes angeordnet ist.

Die Leistungsverzweigungseinheit kann in Form eines Differentialgetriebes gestaltet sein, das einen Differentialkorb als Eingangsteil und zwei Ausgangsräder als Ausgangsteile aufweist. Alternativ kann die Leistungsverzweigungseinheit kann auch in Form einer Doppelkupplung gestaltet sein, die einen Kupplungskorb als Eingangsteil und zwei separat steuerbare Reibungskupplungen mit zwei Kupplungsnaben als Ausgangsteilen aufweist. Mit einer solchen Doppelkupplung, die vom Anmelder auch als "Twinster" bezeichnet wird, kann eine variable Drehmomentverteilung auf die beiden Seitenwellen vorgenommen werden.

Bevorzugte Ausführungsbeispiele werden nachstehend anhand der Zeichnungsfiguren erläutert. Hierin zeigt:
- Figur 1: eine erfindungsgemäße Aktuatoranordnung in einer ersten Ausführungsform
A) im Längsschnitt in einer geöffneten Position der Parksperre;
B) in einer geschlossenen Position der Parksperre;
C) beispielhaft eine Parksperre als Einzelheit im Querschnitt;
- Figur 2: ein Diagramm zur Darstellung verschiedener Schaltzustände einer erfindungsgemäßen Aktuatoranordnung
A) nach einem ersten Funktionsprinzip;
B) nach einem zweiten Funktionsprinzip;
- Figur 3: eine erfindungsgemäße Aktuatoranordnung in einer zweiten Ausführungsform
A) in dreidimensionaler Darstellung;
B) in einem Längsschnitt;
C) in Seitenansicht;
- Figur 4: eine erfindungsgemäße Aktuatoranordnung in einer weiteren Ausführungsform;
- Figur 5: eine erfindungsgemäße Aktuatoranordnung in einer weiteren Ausführungsform;
- Figur 6: eine erfindungsgemäße Aktuatoranordnung in einer weiteren Ausführungsform
A) in Schnittdarstellung;
B) den ersten Kraftübertragungsmechanismus und Teile der Parksperre als Einzelheit in dreidimensionaler Darstellung;
- Figur 7: eine erfindungsgemäße Aktuatoranordnung in einer weiteren Ausführungsform
A) in Schnittdarstellung;
B) Teile des ersten Kraftübertragungsmechanismus und der Parksperre als Einzelheit in dreidimensionaler Darstellung;
C) Teile des ersten Kraftübertragungsmechanismus und der Parksperre als Einzelheit in Schnittdarstellung;
- Figur 8: eine erfindungsgemäße Aktuatoranordnung in einer weiteren Ausführungsform
A) in einer geöffneten Position der Parksperre;
B) in einer geschlossenen Position der Parksperre;
- Figur 9: eine erfindungsgemäße Aktuatoranordnung in einer weiteren Ausführungsform
A) in seitlicher Darstellung, teilweise geschnitten;
B) in dreidimensionaler Darstellung;
C) in dreidimensionaler Darstellung, teilweise geschnitten;
- Figur 10: eine erfindungsgemäße Aktuatoranordnung in einer weiteren Ausführungsform
A) in seitlicher Darstellung, teilweise geschnitten;
B) in dreidimensionaler Darstellung;
- Figur 11: die Antriebsstranganordnung für ein Kraftfahrzeug mit zwei Antriebsträngen.

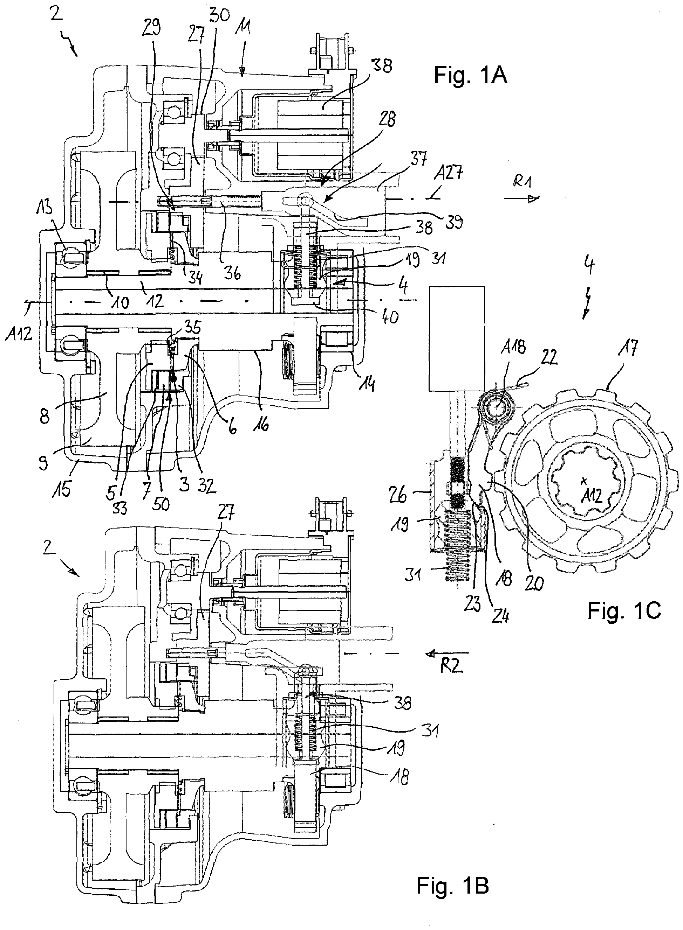

Die Figuren 1A bis 1C, welche nachstehend gemeinsam beschrieben werden, zeigen eine erfindungsgemäße Aktuatoranordnung 2 zum Betätigen einer Kupplung 3 und einer Parksperre 4 in einem Antriebsstrang eines Kraftfahrzeugs in einer ersten Ausführungsform. Die Kupplung 3 dient dazu, eine Drehmomentübertragung im Antriebsstrang des Kraftfahrzeugs bedarfsweise zu steuern. Die Parksperre 4 dient dazu, ein Antriebsbauteil im Antriebsstrang des Kraftfahrzeugs optional zu blockieren, so dass das Kraftfahrzeug an einem unbeabsichtigten Wegrollen gehindert wird, wenn die Antriebsquelle kein Drehmoment zur Verfügung stellt. Die Aktuatoranordnung 2 mit Kupplung 3 und Parksperre 4 kann insbesondere für ein mehrachsgetriebenes Kraftfahrzeug verwendet werden, das eine permanent angetriebene primäre Antriebsachse und eine optional antreibbare sekundäre Antriebsachse aufweist, ohne auf diese Anwendung eingeschränkt zu sein.

Vorliegend umfasst die Kupplung 3 ein drehend antreibbares Kupplungseingangsteil 5, ein Kupplungsausgangsteil 6 und ein Kupplungsbetätigungsglied 7, das ausgestaltet ist, um das Kupplungseingangsteil 5 und das Kupplungsausgangsteil 6 miteinander antriebsmäßig zu verbinden oder voneinander zu trennen. Das Kupplungseingangsteil 5 ist bei der vorliegenden Ausführungsform drehfest mit einem Antriebsteil 8 drehfest und axial beweglich verbunden, dass über Lagermittel 10 auf einer Antriebswelle 12 drehbar gelagert ist. Das Antriebsteil 8 ist vorliegend als Hohlwelle gestaltet die mit einem Antriebsrad 9 fest verbunden ist. Die Antriebswelle 12 ist über weitere Lagermittel 13, 14 in einem ortsfesten Gehäuse 15 um eine Drehachse A12 drehbar gelagert. Die Welle 12 hat ein Abtriebsrad 16, das vorliegend einteilig mit der Welle ausgebildet ist und zur Drehmomentübertragung auf eine im Leistungspfad nachgelagerte Antriebseinheit (nicht dargestellt), beispielsweise ein Differentialgetriebe oder eine Doppelkupplung zu übertragen.

Die Parksperre 4 umfasst ein Sperrenrad 17, das mit der Antriebswelle 12 drehfest verbunden ist, ein Sperrelement 18, das mit dem Sperrenrad 17 zusammenwirkt und in dem ortsfesten Gehäuse 15 bewegbar gelagert ist sowie ein Parksperrenbetätigungsglied 19 zum Betätigen des Sperrelements 18. Das Sperrelement 18 ist in eine Sperrposition überführbar ist, in der das Sperrelement 18 das Sperrenrad 17 blockiert, so dass die Antriebswelle 12 drehfest gehalten wird, und in eine Freigabeposition, in der das Sperrelement 18 das Sperrenrad 17 freigibt, so dass das Sperrenrad 17 und die damit verbundene Antriebswelle 12 frei drehen können.

Die Parksperre 4, die auch als Parksperreneinheit bezeichnet werden kann, ist als funktionale Einzelheit in Figur 1C gezeigt. Es ist erkennbar, dass das Sperrenrad 17 an einer äußeren Umfangsfläche eine Vielzahl von über den Umfang verteilten Rastausnehmungen aufweist, in die das Sperrelement 18 mit einem Sperrzahn 20 formschlüssig eingreifen kann. Das Sperrelement 18 ist in eine Sperrstellung überführbar, in der es mit dem Sperrenrad 17 formschlüssig verbunden ist, so dass das Sperrenrad an einer Drehbewegung gehindert wird. In der Entriegelungsstellung ist das Sperrelement 18 gegenüber dem Sperrenrad 17 nach außen verschwenkt, so dass das Sperrenrad und damit die Ausgangswelle 12 der Antriebsanordnung frei drehbar sind.

Das Sperrelement 18 ist in Form einer Sperrklinke 18 gestaltet, die mit einem Endabschnitt in dem Gehäuse 15 um eine Schwenkachse A18 schwenkbar gelagert ist. Zum Überführen der Sperrklinke 18 von der Sperrstellung in die Freigabestellung ist ein Federelement 22 vorgesehen. Das Federelement 22 ist in Form einer Schenkelfeder gestaltet, welche mit einem ersten Schenkel an einem ortsfesten Bauteil abgestützt ist und mit einem zweiten Schenkel an der Sperrklinke 18 abgestützt ist.

An ihrem entgegengesetzten freien Ende weist die Sperrklinke 18 außen eine Funktionsfläche 23 auf, die mit einer Druckfläche 24 des vom Aktuator 11 bewegbaren Betätigungsglieds 19 zusammenwirkt. Die Funktionsfläche 23 ist gegenüber einer die Drehachse A12 beinhaltenden Radialebene, welche durch den Kontaktpunkt zwischen Funktionsfläche 23 und Druckfläche 24 verläuft, geneigt. Auf diese Weise wird eine translatorische Bewegung des Betätigungsglieds 19 in eine Schwenkbewegung der Sperrklinke 18 umgesetzt. Zur Führung des Betätigungsglieds 19 ist eine Führungshülse 26 vorgesehen, in der das Betätigungsglied 19 axial beweglich geführt ist.

Die Betätigung der Kupplung 3 als auch der Parksperre 4 erfolgt mittels des steuerbaren Aktuators 11. Der Aktuator 11 umfasst ein bewegbares Aktuator-Stellglied 27, das mit dem Kupplungsbetätigungsglied 7 und mit dem Parksperrenbetätigungsglied 19 wirkverbunden ist. Die Wirkverbindung ist derart, dass in einer ersten Stellposition beziehungsweise Stellrichtung die Parksperre 4 geschlossen wird (Parkmodus) und ein einer zweiten Stellposition beziehungsweise Stellrichtung die Kupplung 3 geschlossen wird (Antriebsmodus). Das Aktuator-Stellglied 27 kann eine weitere Stellposition zwischen der ersten und zweiten Stellposition einnehmen, in der die Kupplung 3 und die Parksperre 4 geöffnet werden (Freilaufmodus). Das Aktuator-Stellglied 27 ist über einen ersten Kraftübertragungsmechanismus 28 mit dem Kupplungsbetätigungselement 7 verbunden und über einen zweiten Kraftübertragungsmechanismus 29 mit dem Parksperrenbetätigungsglied 19 verbunden.

Bei der vorliegenden Ausführungsform ist der Aktuator 11 in Form eines elektromechanischen Aktuators gestaltet und umfasst einen Elektromotor 38, der von einer elektronischen Steuereinheit (nicht dargestellt) ansteuerbar ist und elektrische Energie in eine Drehbewegung umsetzt. Es versteht sich jedoch, dass der Aktuator alternativ beispielsweise auch in Form eines elektromagnetischen, hydraulischen oder pneumatischen Aktuators gestaltet sein kann. Das Aktuator-Stellglied 27 ist hier in Form eines Zwischenrads gestaltet, das in dem Gehäuse 15 um eine Drehachse A27 drehbar gelagert ist. Das Zwischenrad 27 wird von einem Antriebsritzel 29 des elektromechanischen Aktuators 11 drehend angetrieben und überträgt die Drehbewegung auf den ersten beziehungsweise zweiten Kraftübertragungsmechanismus 28, 29.

Vorliegend weist der Kraftübertragungsmechanismus 29 für die Kupplung 3 eine Rampenanordnung 50 auf, die ausgestaltet ist, eine Drehbewegung des Zwischenrads 27 in eine translatorische Bewegung des Kupplungsbetätigungsglieds 7 umzuwandeln. Auf diese Weise können das erste Kupplungsteil 5 und das zweite Kupplungsteil 6 zur Übertragung eines Drehmoments in Eingriff miteinander gebracht werden, oder voneinander entkoppelt werden, sodass eine Drehmomentübertragung unterbrochen ist.

Die Rampenanordnung 50 umfasst einen Stützring 32, der von dem Zwischenrad 27 drehend antreibbar ist und gegenüber dem ortsfesten Gehäuse 15 axial abgestützt ist, und einen Stellring, der gegenüber dem Stützring 32 axial verschiebbar und am ersten Kupplungsteil 5 axial abgestützt ist. Vorliegend bildet der Stellring das Kupplungsbetätigungsglied 7, welches das Kupplungsteil 5 über ein zwischengeschaltetes Axiallager 33 axial beaufschlagt.

Die Rampenanordnung 50 ist derart gestaltet, dass - ausgehend von einer Endposition, in welcher die beiden Ringe 32, 7 axial angenähert ist - der Stellring 7 durch relatives Verdrehen des Stützrings 32 axial von dem Stützring 32 weg bewegt wird. Hierfür haben die beiden ringe 32, 7 entsprechende Stellkonturen, mit denen sie axial aneinander abgestützt sind. Die Stellkonturen haben in Umfangsrichtung betrachtet eine variable Höhe, so dass eine relative Verdrehbewegung des drehend antreibbaren Stützrings 32 in eine Axialbewegung des Stellrings 7 umgewandelt wird. Der Stellring 7 ist über das Axiallager 33 an einem Kragen des ersten Kupplungsteils 5 axial abgestützt, so dass eine Axialbewegung des Stellrings eine Axialbewegung des Kupplungsteils 5 bewirkt.

Es ist erkennbar, dass die Kupplung 3 als formschlüssige Kupplung gestaltet ist, wobei das erste Kupplungsteil 5 erste Eingriffsmittel 34 aufweist, die mit gegengleichen Eingriffsmitteln 35 des zweiten Kupplungsteils 6 formschlüssig in Eingriff bringbar sind. Die ersten und zweiten Eingriffsmittel 34, 35 sind nach Art einer Stirnverzahnung gestaltet. Insofern kann die Kupplung 3 auch als Zahn- oder Klauenkupplung bezeichnet werden. Es versteht sich jedoch, dass auch andere Arten von Kupplungen verwendbar sind, die eine Drehmomentübertragung wahlweise herstellen oder unterbrechen können.

Der Kraftübertragungsmechanismus 28 für die Parksperre 4 umfasst einen Spindeltrieb mit einer drehend antreibbaren Spindelwelle 36 und einer hiermit verbundenen Spindelhülse 37 sowie eine Koppelstange 38. Die Spindelhülse 37 hat einen Schlitz 39 mit einer Steigungskomponente, in welcher die Koppelstange 38 mit einem ersten Ende geführt ist. Am entgegengesetzten zweiten Ende 40 der Koppelstange 38 ist das Parksperrenbetätigungsglied 19 abgestützt, wobei eine Feder 31 vorgesehen ist, welche das Parksperrenbetätigungsglied 19 in Richtung Endanschlag 40 beaufschlagt. Durch Drehen der Spindelwelle 36 in eine erste Drehrichtung bewegt sich die darauf aufgeschraubte Spindelhülse 37 in die erste axiale Richtung R1 vom Zwischenrad 27 weg. In der vom Zwischenrad entfernten Schiebestellung, wie in Figur 1A dargestellt, ist die Spindelhülse 37 vom Zwischenrad 27 wegbewegt, so dass die in dem Führungsschlitz 39 der Hülse 37 geführte Koppelstange 38 mit ihrem hülsenseitigen Ende an die Spindelwelle 36 angenähert ist. Entsprechend ist das Betätigungsglied 19 gegen die Vorspannkraft der Feder 31 von der Funktionsfläche 23 der Sperrklinke 18 weg verschoben ist. Die Sperrklinke 18 ist freigegeben und durch die Federkraft des Federelements 22 gegenüber dem Sperrenrad 17 nach radial außen verschwenkt.

Durch Drehen der Spindelwelle 36 in die entgegengesetzte zweite Drehrichtung bewegt wird die Spindelhülse 37 entsprechend in die axial entgegengesetzte zweite Richtung R2 bewegt, das heißt auf das Zwischenrad 27 zu. Das Führungsende 39 der Koppelstange 38 ist entlang des Führungsschlitzes 39 der Hülse 37 von der Spindelwelle 36 weg beziehungsweise auf das Betätigungsglied 19 zu bewegt. Das Betätigungsglied 19 ist entsprechend freigegeben und wird von der Feder 31 gegen die Funktionsfläche 23 der Sperrklinke 18 beaufschlagt. Wenn der Zahn 20 sich im Bereich einer Lücke des Sperrenrads 17 befindet, wirkt das Betätigungsglied 19 auf die Sperrklinke 18 im Schließsinn ein und beaufschlagt diese nach radial innen. Der Zahn 20 greift formschlüssig in eine der Ausnehmungen des Sperrenrads 18 ein, so dass letzteres drehgesichert ist. Diese geschlossene Stellung der Parksperre 4 ist in Figur 1B gezeigt.

Zum erneuten Lösen wird die Spindelhülse 37 wieder in ihre erste Position bewegt. Damit sich die Spindelhülse 27 beim Drehen der Spindelwelle 36 nicht mitdreht, ist die Spindelhülse 27 auf geeignete Weise gegenüber dem ortsfesten Bauteil verdrehgesichert. Die Feder 31 ist vorzugsweise in Form einer Schraubenfeder gestaltet, die in einem Aufnahmeraum des Betätigungsglieds 19 einsitzt. Die Feder 31 ist einerseits gegen das Betätigungsglied 19 und andererseits gegen das Parksperrengehäuse axial abgestützt ist.

Durch die Ausgestaltung des Kraftübertragungsmechanismus 29 bewirkt eine Drehbewegung der Spindelhülse 37 eine Verschiebebewegung des Parksperrenbetätigungsglied 19.

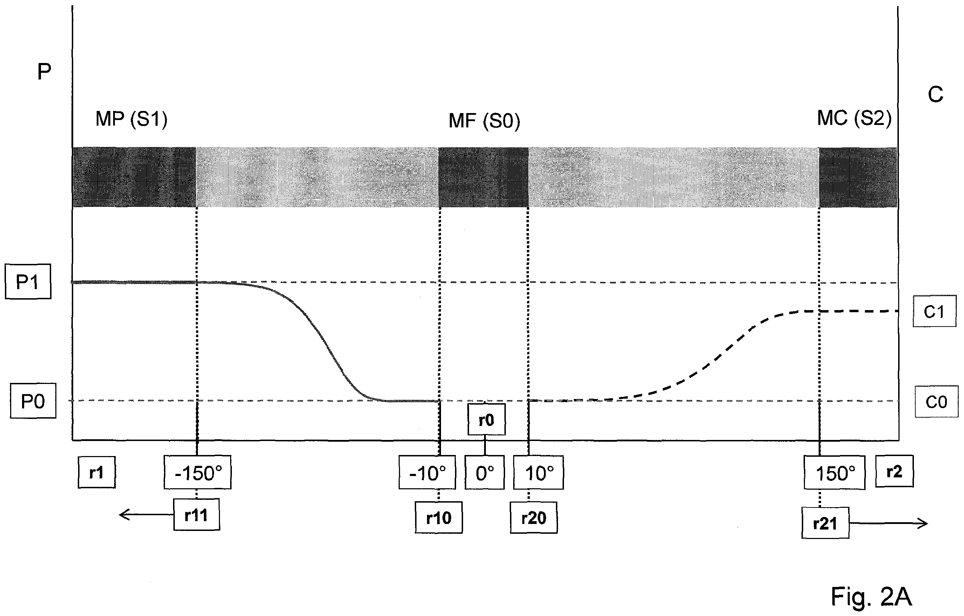

Die verschiedenen einstellbaren Betriebsmodi MP, MF, MC und das Zusammenwirken der Bewegungswege der für die Betätigung der Kupplung 3 und der Parksperre 4 maßgeblich beteiligten Komponenten wird nach einem ersten Funktionsprinzip nachstehend anhand der Figur 2A erläutert.

In neutraler Drehposition r0 des Aktuator-Stellglieds 27 sind sowohl die Kupplung 3 als auch die Parksperre 4 geöffnet. Dieser Betriebsmodus wird daher auch als Freilaufmodus MF oder Neutralmodus bezeichnet. Das Fahrzeug ist nicht vom Elektromotor, sondern nur von der primären Antriebsquelle antreibbar. Durch Drehen des Aktuator-Stellglieds 27 in die erste Drehrichtung r1 wird die Spindelwelle 36 entsprechend in derselben Richtung gedreht, wobei die die Spindelhülse 37 translatorisch bewegt wird und die hiermit gekoppelte Koppelstange von der Position P0 in die Position P1 bewegt wird, was mit der durchgezogenen Linie dargestellt ist. Dabei fängt die Koppelstange 38 an sich zu bewegen, wenn die Spindelwelle 36 die Drehposition r10 erreicht hat. Diese ist vorliegend beispielhaft mit 10° angegeben, ohne hierauf eingeschränkt zu sein. Bei Erreichen der Drehposition r11 in der ersten Drehrichtung r1 hat die Koppelstange 38 die Endposition P1 erreicht, in der die Parksperre 4 geschlossen ist. Dieser Betriebsmodus kann auch als Parkmodus MP oder erster Modus bezeichnet werden. Die Parksperre ist geschlossen, während die Kupplung geöffnet ist. Durch erneutes Rückdrehen des Aktuator-Stellglieds 27 von der Drehstellung r11 zur Neutralstellung r0, das heißt in entgegengesetzter Drehrichtung r2, wird die Parksperre wieder geöffnet. In dem Bereich zwischen dem Freilaufmodus MF und dem Parkmodus ist das Fahrzeug nicht in Betrieb.

In der Neutralstellung r0 ist auch die Kupplung 3 geöffnet, das heißt die beiden Ringe 7, 32 des Rampenmechanismus sind voneinander beabstandet. Wenn, ausgehend von dieser Neutralstellung r0, das Aktuator-Stellglied 27 in die zweite Drehrichtung r2 gedreht wird, wandert die Scheibe 7 und das daran abgestützte Kupplungsteil 5 von der Kupplungsposition C0 in die Position C1, was mit der gestrichelten Linie dargestellt ist. Dabei fängt das Kupplungsteil 5 sich an zu bewegen, wenn das Aktuator-Stellglied 27 die Drehposition r20 passiert. Diese ist vorliegend beispielhaft mit 10° angegeben, wobei auch andere Werte möglich sind. Während des Übergangs zwischen dem Freilaufmodus MF und dem Koppelmodus MC findet eine Synchronisierung der mit unterschiedlichen Drehzahlen drehenden Bauteile statt. Bei Erreichen der Drehposition r21 in der zweiten Drehrichtung r2 hat das Kupplungsteil 5 die Endposition C1 erreicht, in der die Kupplung 3 vollständig geschlossen ist. Dieser Betriebsmodus kann auch als Koppelmodus MC oder zweiter Modus bezeichnet werden. Die Parksperre ist geöffnet, während die Kupplung geschlossen ist, so dass das Fahrzeug vom Elektromotor antreibbar ist. Durch erneutes Rückdrehen des Aktuator-Stellglieds 27 von der Drehstellung r21 zur Neutralstellung r0 wird die Kupplung wieder geöffnet.

Dieser Freilaufmodus MF, in der Kupplung und Parksperre geöffnet sind, wird beispielsweise gewählt, wenn das Fahrzeug eine bestimmte Fahrzeuggeschwindigkeit überschreitet, in der ein elektromotorischer Antrieb nicht mehr gewünscht ist.

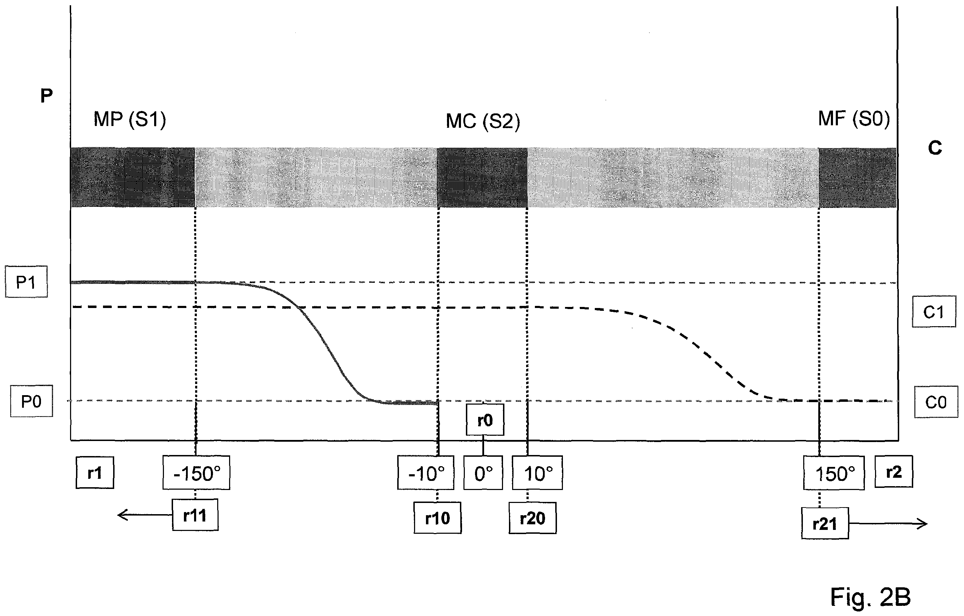

In Figur 2B ist ein zweites Funktionsprinzip gezeigt, das bei entsprechender Ausgestaltung der Aktuatoranordnung realisiert werden kann. Das vorliegende Funktionsprinzip entspricht in weiten Teilen dem Prinzip gemäß Figur 2A, so dass hinsichtlich der Gemeinsamkeiten auf obige Beschreibung Bezug genommen wird. Die Bewegung des Betätigungsglieds für die Parksperre ist mit durchgezogener Linie dargestellt, während die Bewegung des Betätigungsglieds für die Kupplung mit gestrichelter Linie dargestellt ist. Es versteht sich, dass alle in der vorliegenden Offenbarung beschriebene Ausführungsformen entweder nach dem ersten Funktionsprinzip oder nach dem zweiten Funktionsprinzip gestaltet sein können, was durch entsprechende Ausgestaltung der Aktuatoranordnung realisiert werden kann.

Die Bewegungskinematik für die Parksperre nach Figur 2B ist identisch mit der Ausführung nach Figur 2A. Der Parkmodus MP liegt an, wenn die Koppelstange 38 die Endposition P1 erreicht hat. Die Parksperre ist geschlossen. Im Unterschied zur obigen Ausführung ist bei der vorliegenden Ausführungsform gemäß Figur 2B vorgesehen, dass im Parkmodus MP auch die Kupplung geschlossen ist. Wird das Aktuator-Stellglied 27 von der Drehstellung r11 zur Stellung r0 gedreht, wird die Parksperre geöffnet (durchgezogene Linie zwischen MP und MC), während die Kupplung geschlossen bliebt (gestrichelte Linie zwischen MP bis MF). In diesem Bereich zwischen dem Parkmodus MP und dem Koppelmodus MC wird das Fahrzeug vom Elektromotor nicht angetrieben. Der Koppelmodus MC, in dem das Fahrzeug vom Elektromotor angetrieben wird, ist erreicht, wenn die Parksperre vollständig geöffnet ist, das heißt vorliegend, wenn die Drehstellung r10 erreicht ist beziehungsweise überschritten wird. Der Freigabemodus MF wird durch weiteres Drehen über die Drehstellung r20 hinaus erreicht. Die Kupplung wird bei Drehung des Aktuator-Stellglieds 27 in Richtung r2 zwischen dem Koppelmodus MC und dem Freigabemodus MF geöffnet. Bei Erreichen der Drehstellung r21, vorliegend beispielhaft bei ca. 150°, ist die Kupplung vollständig geöffnet. Der Elektromotor ist vollständig vom Antriebsstrang abgekoppelt. Bei erneutem Rückdrehen in Richtung r1 wird die Kupplung wieder geschlossen, wobei zwischen dem Freigabemodus MF und dem Koppelmodus MC ein Synchronisierungsphase durchlaufen wird, in dem die Drehzahlen der relativ zueinander drehenden Bauteile synchronisiert werden.

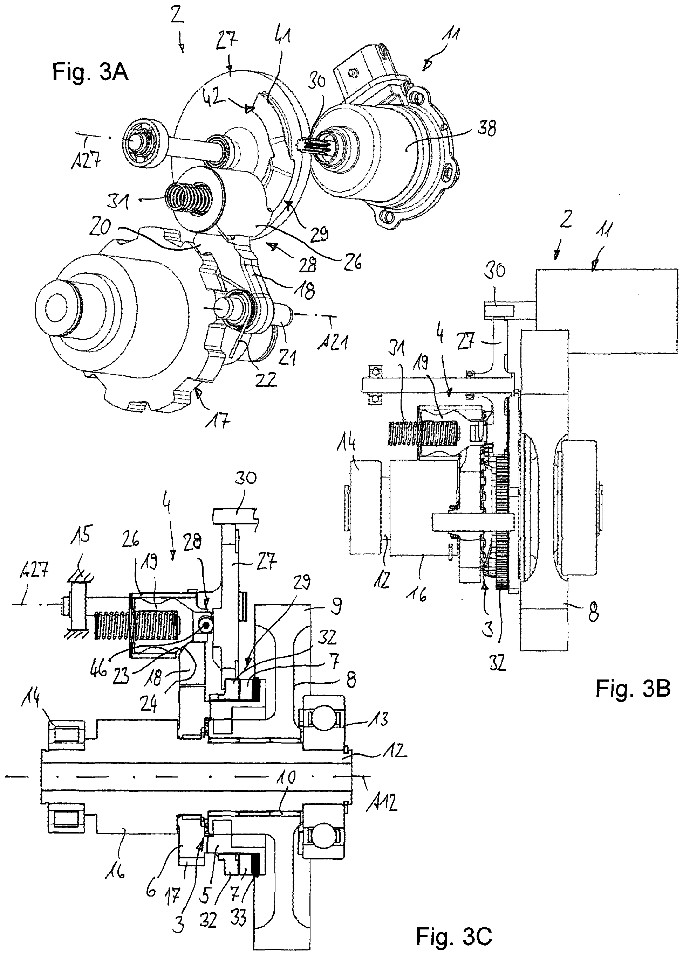

Die Figuren 3A, 3B und 3C, die nachstehend gemeinsam beschrieben werden, zeigen eine erfindungsgemäße Kupplungsanordnung 2 in einer zweiten Ausführungsform. Diese entspricht weitestgehend der Ausführungsform gemäß den Figuren 1 und 2, auf deren Beschreibung insofern Bezug genommen wird. Dabei sind gleiche beziehungsweise einander entsprechende Einzelheiten mit gleichen Bezugszeichen versehen wie in Figur 1.

Die Kupplung 3 weist ein drehend antreibbares Kupplungseingangsteil 5, ein Kupplungsausgangsteil 6 und ein Kupplungsbetätigungsglied 7 auf, das ausgestaltet ist, um das Kupplungseingangsteil 5 und das Kupplungsausgangsteil 6 miteinander antriebsmäßig zu verbinden oder voneinander zu trennen. Das Kupplungseingangsteil 5 ist bei der vorliegenden Ausführungsform drehfest und axial beweglich mit dem Antriebsteil 8 verbunden. Das Antriebsteil 8 umfasst einen Hohlwellenabschnitt, der über Lagermittel 10 auf einer Antriebswelle 12 drehbar gelagert ist, sowie ein hiermit verbundenes Antriebsrad 9, über das ein Drehmoment von einer Antriebsquelle eingeleitet werden kann. Die Antriebswelle 12 ist über weitere Lagermittel 13, 14 in einem ortsfesten Gehäuse 15 um eine Drehachse A12 drehbar gelagert. Die Welle 12 hat ein Abtriebsrad 16, das vorliegend einteilig mit der Welle ausgebildet ist und zur Drehmomentübertragung auf eine nachgelagerte Antriebseinheit dient.

Die Parksperre 4 umfasst ein Sperrenrad 17, das mit dem zweiten Kupplungsteil 6 fest verbunden ist, insbesondere einteilig mit diesem ausgeführt ist, ein Sperrelement 18, das mit dem Sperrenrad 17 zusammenwirkt und in dem ortsfesten Gehäuse 15 bewegbar gelagert ist sowie ein Parksperrenbetätigungsglied 19 zum Betätigen des Sperrelements 18. Das Sperrelement 18 ist in eine Sperrposition überführbar ist, in der das Sperrelement 18 das Sperrenrad 17 blockiert, so dass das zweite Kupplungsteil 6 drehfest gehalten wird, und in eine Freigabeposition, in der das Sperrelement 18 das Sperrenrad 17 freigibt, so dass das Sperrenrad 17 und das damit verbundene zweite Kupplungsteil 6 frei drehen können.

Das Sperrelement 18 ist als Sperrklinke gestaltet, die mittels eines Lagerbolzens 21 in dem nicht näher dargestellten Gehäuse 15 um die Schwenkachse A18 schwenkbar gelagert ist. Zum Überführen der Sperrklinke 18 von der Sperrstellung in die Freigabestellung ist ein Federelement (nicht dargestellt) vorgesehen.

An ihrem freien Ende weist die Sperrklinke 18 außen eine Funktionsfläche 23 auf, die mit einer Druckfläche 24 des Betätigungsglieds 19 zusammenwirkt. Es ist insbesondere in Figur 3A erkennbar, dass die Bewegungsrichtung des Betätigungsglieds 19, das von der Feder 31 in Richtung Sperrklinke 18 beaufschlagt wird, parallel zur Schwenkachse A18 der Sperrklinke 18 verläuft. Die Funktionsfläche 23 der Sperrklinke 18 verläuft winklig gegenüber einer senkrecht zur Drehachse A12 verlaufenden Radialebene, welche durch den Kontaktpunkt zwischen Funktionsfläche 23 und Druckfläche 24 verläuft. Auf diese Weise wird eine translatorische Bewegung des Betätigungsglieds 19 in eine Schwenkbewegung der Sperrklinke 18 umgesetzt. Zur Führung und Abstützung des Betätigungsglieds 19 ist die Führungshülse 26 vorgesehen, in der das Betätigungsglied 19 axial beweglich geführt ist.

Die Betätigung der Kupplung 3 und der Parksperre 4 erfolgt mittels des steuerbaren Aktuators 11. Der Aktuator 11 umfasst ein von der Motorwelle des Elektromotors 38 drehend antreibbares Aktuator-Stellglied 27, das mit dem Kupplungsbetätigungsglied 7 und mit dem Parksperrenbetätigungsglied 19 wirkverbunden ist. Die Wirkverbindung ist derart, dass in einer ersten Stellposition beziehungsweise Stellrichtung die Parksperre 4 geschlossen wird (Parkmodus) und ein einer zweiten Stellposition beziehungsweise Stellrichtung die Kupplung 3 geschlossen wird (Antriebsmodus). Das Aktuator-Stellglied 27 kann eine weitere Stellposition zwischen der ersten und zweiten Stellposition einnehmen, in der die Kupplung 3 und die Parksperre 4 geöffnet werden (Freilaufmodus). Das Aktuator-Stellglied 27 ist über einen ersten Kraftübertragungsmechanismus 28 mit dem Kupplungsbetätigungselement 7 verbunden ist und über einen zweiten Kraftübertragungsmechanismus 29 mit dem Parksperrenbetätigungsglied 19 verbunden.

Das Aktuator-Stellglied 27 ist bei der vorliegenden Ausführungsform in Form eines kombinierten Rampen-Zahnrads gestaltet, das in dem Gehäuse 15 um eine Drehachse A27 drehbar gelagert ist. Das Rampen-Zahnrad 27 wird von dem Antriebsritzel 30 des Elektromotors 38 drehend angetrieben und überträgt die Drehbewegung auf den ersten beziehungsweise zweiten Kraftübertragungsmechanismus 28, 29.

Vorliegend weist der Kraftübertragungsmechanismus 29 für die Kupplung 3 eine Rampenanordnung 50 auf, das ausgestaltet ist, eine Drehbewegung des Rampen-Zahnrads 27 in eine translatorische Bewegung des Kupplungsbetätigungsglieds 7 umzuwandeln. Auf diese Weise können das erste Kupplungsteil 5 und das zweite Kupplungsteil 6 zur Übertragung eines Drehmoments in Eingriff miteinander gebracht werden, oder voneinander entkoppelt werden, sodass eine Drehmomentübertragung unterbrochen ist. Die Rampenanordnung 50 umfasst einen Stützring 32, der von dem Zwischenrad 27 drehend antreibbar ist und gegenüber einem ortsfesten Bauteil axial abgestützt ist, und einen Stellring, der gegenüber dem Stützring 32 axial verschiebbar und am ersten Kupplungsteil 5 axial abgestützt ist, wobei der Stellring das Kupplungsbetätigungsglied 7 bildet. Der Stellring 7 ist über ein Axiallager 33 an einem Kragen des ersten Kupplungsteils 5 axial abgestützt, so dass eine Axialbewegung des Stellrings eine Axialbewegung des Kupplungsteils 5 bewirkt. Im Übrigen entsprechen Aufbau und Funktionsweise der Rampenanordnung und der Kupplung der vorliegenden Ausführungsform derjenigen gemäß Figur 1, so dass auf obige Beschreibung Bezug genommen wird.

Der Kraftübertragungsmechanismus 28 für die Parksperre 4 umfasst eine Rampenanordnung 42, die auf einer Stirnseite des Rampen-Zahnrads 27 angeordnet ist und mit einem Übertragungselement 46 zusammenwirkt, welches wiederum am Parksperrenbetätigungsglied 19 abgestützt ist. Die Rampenanordnung 42 hat eine Stellkontur 41, die so gestaltet ist, dass durch Drehen des Rampen-Zahnrads 27 in der ersten Drehrichtung r1 das Übertragungsglied 46, das an der Stellkontur 41 abgestützt ist, von dem Zahnrad 27 axial weg beaufschlagt wird. Dementsprechend wird das Betätigungsglied 19 gegen die Vorspannkraft der Feder 31 von der Funktionsfläche 23 der Sperrklinke 18 weg verschoben, so dass die Sperrklinke 18 freigegeben und durch die Federkraft des Federelements 22 gegenüber dem Sperrenrad 17 nach radial außen verschwenkt wird.

Durch Drehen des Rampen-Zahnrads 27 in die entgegengesetzte zweite Drehrichtung läuft das Übertragungselement 46 wieder in Bereiche geringerer Tiefe der Rampen-Stellkontur 41. Das Betätigungsglied 19 ist entsprechend freigegeben und wird von der Feder 31 gegen die Funktionsfläche 23 der Sperrklinke 18 beaufschlagt. Wenn der Zahn 20 sich im Bereich einer Lücke des Sperrenrads 17 befindet, wirkt das Betätigungsglied 19 auf die Sperrklinke 18 im Schließsinn ein und beaufschlagt diese nach radial innen. Der Zahn 20 greift formschlüssig in eine der Ausnehmungen des Sperrenrads 18 ein, so dass letzteres drehgesichert ist.

Im Übrigen entsprechen Aufbau und Funktionsweise im Wesentlichen dem zu den Figuren 1 und 2 beschriebenen Ausführungsbeispiel, insbesondere auch hinsichtlich der einstellbaren Betriebsmodi, auf deren Beschreibung insofern Bezug genommen wird.

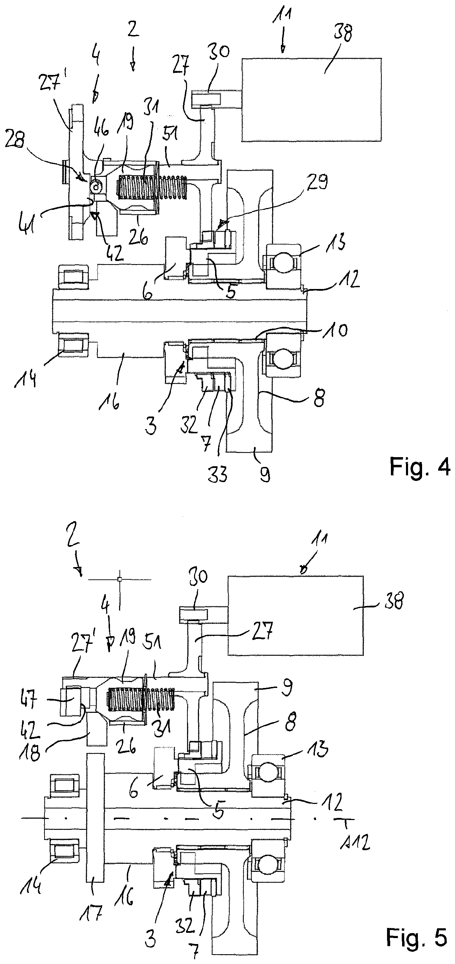

Figur 4 zeigt eine erfindungsgemäße Kupplungsanordnung 2 in einer weiteren Ausführungsform. Diese entspricht weitestgehend der Ausführungsform gemäß den Figuren 3A bis 3C, auf deren Beschreibung insofern Bezug genommen wird. Dabei sind gleiche beziehungsweise einander entsprechende Einzelheiten mit gleichen Bezugszeichen versehen wie in Figur 3, beziehungsweise Figur 1.

Ein Unterschied besteht lediglich in der Anordnung und Ausgestaltung des Aktuator-Stellglieds 27 und des ersten Kraftübertragungsmechanismus 28. Das Stellglied 27 ist bei der vorliegenden Ausführungsform zweigeteilt und umfasst ein Zahnrad, das ein von der Motorwelle 30 drehend antreibbar ist und Drehmoment auf den drehend antreibbaren Stützring 32 zum Verstellen des Kupplungsbetätigungsglieds 7 überträgt, und ein Rampenrad 27", das über eine Zwischenwelle 46 mit dem Zahnrad 27 drehfest verbunden ist und zum Betätigen des Parksperrenbetätigungsglieds 19 ausgestaltet ist. Der zweite Kraftübertragungsmechanismus 29 ist im Übrigen hinsichtlich Aufbau und Funktionsweise wie bei der Ausführungsform aus Figur 3 gestaltet, auf deren Beschreibung hinsichtlich weiterer Details verwiesen wird.

Figur 5 zeigt eine erfindungsgemäße Kupplungsanordnung 2 in einer weiteren Ausführungsform. Diese entspricht weitestgehend der Ausführungsform gemäß den Figuren 3A bis 3C und 4, auf deren Beschreibung insofern Bezug genommen wird. Dabei sind gleiche beziehungsweise einander entsprechende Einzelheiten mit gleichen Bezugszeichen versehen wie in den Figuren 1, 3 und 4.

Ein Unterschied besteht lediglich in der Anordnung und Ausgestaltung des Aktuator-Stellglieds 27 und des ersten Kraftübertragungsmechanismus 28. Das Stellglied 27 umfasst ein Zahnrad, das von der Motorwelle 30 drehend antreibbar ist und Drehmoment auf den drehend antreibbaren Stützring 32 zum Verstellen des Kupplungsbetätigungsglieds 7 überträgt, und eine Verzahnung 27`, die Drehmoment zum Betätigen der Parksperre 4 überträgt. Hierfür umfasst der zweite Kraftübertragungsmechanismus 29 neben der Verzahnung 27' eine Zahnstange 47, die mit der Verzahnung 27" in Eingriff ist und bei Drehbewegung der Welle 51 linear verstellt wird. Die Zahnstange 47 hat eine rampenförmige Seitenfläche 42, an welcher das Parksperrenbetätigungsglied 19 mit einer Stirnseite axial abgestützt ist.

Durch Drehen des Zwischenrads 27, beziehungsweise der hiermit drehfest verbundenen Betätigungswelle 51 in der ersten Drehrichtung wird die Zahnstange 47 in eine erste Richtung linear bewegt, in der die rampenförmige Seitenfläche 42 in Bereiche größerer Tiefe wandert. Das über ein Übertragungselement 46 an der Zahnstange 47 abgestützte Betätigungsglied 19 wird entsprechend freigegeben und von der Feder 31 in Richtung Funktionsfläche 23 der Sperrklinke 18 verschoben. Die Sperrklinke 18 wird in Bezug auf die Drehachse A12 des Sperrenrads 17 nach radial innen beaufschlagt und greift mit dem Sperrenzahn 20 in eine Ausnehmung des Sperrenrads 17 ein. Die Parksperre 4 ist somit geschlossen.

Durch Drehen des Zwischenrads 27, beziehungsweise der hiermit drehfest verbundenen Betätigungswelle 51 in der entgegengesetzten zweiten Drehrichtung wird die Zahnstange 47 in die entgegengesetzte zweite Richtung linear bewegt, in der die rampenförmige Seitenfläche 42 in Bereiche geringerer Tiefe wandert. Das Betätigungsglied 19 wird entsprechend von der Zahnstange 47 beziehungsweise von der Sperrklinke 17 weg bewegt, so dass die Sperrklinke 17 freigegeben wird und von der Feder 22 nach radial außen geschwenkt wird. Die Parksperre 4 wird somit wieder geöffnet. Der Freilaufmodus ist erreicht, in dem die Parksperre 4 und die Kupplung 3 beide geöffnet sind. Durch weiteres Drehen des Zwischenrads 27 in der zweiten Drehrichtung r2 wird dann die Kupplung 3 geschlossen, wobei die Parksperre 4 geöffnet bleibt.

Im Übrigen entspricht die vorliegende Ausführungsform hinsichtlich Aufbau und Funktionsweise den oben genannten Ausführungsformen, auf deren Beschreibung hinsichtlich weiterer Einzelheiten verwiesen wird.

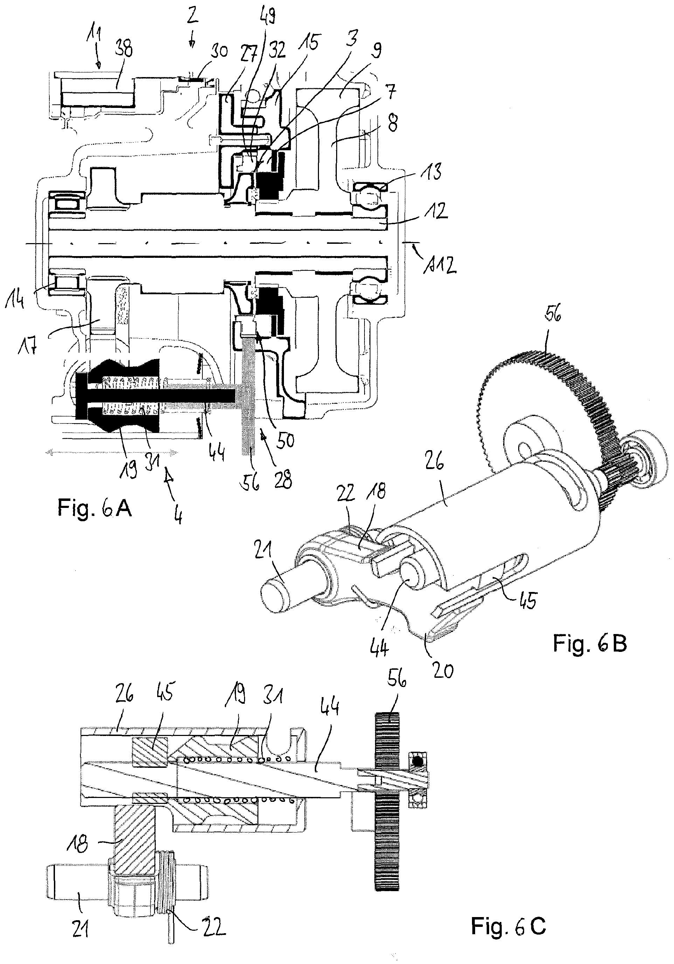

Die Figuren 6A, 6B und 6C, die nachstehend gemeinsam beschrieben werden, zeigen eine erfindungsgemäße Kupplungsanordnung 2 in einer weiteren Ausführungsform. Diese entspricht weitestgehend der Ausführungsform gemäß den Figuren 1 und 2, auf deren Beschreibung insofern Bezug genommen wird. Dabei sind gleiche beziehungsweise einander entsprechende Einzelheiten mit gleichen Bezugszeichen versehen wie in den Figuren 1 und 2.

Kupplung 3 und Parksperre 4 sind hinsichtlich Aufbau und Funktionsweise im Wesentlichen so aufgebaut, wie bei der Ausführungsform gemäß Figur 1. Ein Unterschied besteht darin, dass die Betätigungsrichtung des Parksperrenbetätigungsglieds 19 bei der vorliegenden Ausführungsform parallel zur Antriebswelle 12, beziehungsweise deren Drehachse A12 verläuft.

Die Betätigung der Kupplung 3 und der Parksperre 4 erfolgt mittels des steuerbaren Aktuators 11, der das Stellglied 27 wahlweise in die erste Drehrichtung r1 oder entgegengesetzte zweite Drehrichtung r2 drehend antreiben kann. Das Stellglied 27 ist, wie bei den obigen Ausführungsformen als Zahnrad gestaltet, welches mit dem Kupplungsbetätigungsglied 7 und dem Parksperrenbetätigungsglied 19 wirkverbunden ist. Die Wirkverbindung ist derart, dass - jeweils ausgehend von einer Neutralstellung (Freilaufmodus) - in einer ersten Drehrichtung die Parksperre 4 geschlossen wird (Parkmodus) und ein einer zweiten Drehrichtung die Kupplung 3 geschlossen wird (Antriebsmodus).

Eine Besonderheit der vorliegenden Ausführungsform besteht darin, dass sich die Leistungspfade zum Antreiben des Kupplungsbetätigungselements 7 einerseits und des Parksperrenbetätigungsglieds 19 andererseits sich nicht schon am Zwischenrad 27 gabeln, sondern erst am drehend antreibbaren Stützring 32.

Der Kraftübertragungsmechanismus 29 für die Kupplung 3 weist, wie bei der Ausführungsform nach Figur 1, eine Rampenanordnung 50 auf, die ausgestaltet ist, eine Drehbewegung des Zwischenrads 27 in eine translatorische Bewegung des Kupplungsbetätigungsglieds 7 umzuwandeln. Die Rampenanordnung 50 umfasst den Stützring 32 und den Stellring, welcher das Kupplungsbetätigungsglied 7 bildet. Der Stützring 32 ist vom Zwischenrad 27 drehend antreibbar und gegen ein ortsfestes Bauteil axial abgestützt. Der Stellring ist drehfest und axial beweglich angeordnet und gegen das erste Kupplungsteil 5 axial abgestützt.

Bei der vorliegenden Ausführungsform hat der drehend antreibbare Stützring 32 eine Außenverzahnung 49, die mit einem Antriebsrad 56 in Eingriff ist, um dieses drehend anzutreiben. Das Antriebsrad 56 treibt eine Parksperrenwelle 44 drehend an, beziehungsweise ist drehfest mit dieser verbunden, die in Form einer Spindelwelle gestaltet ist. Auf der Spindelwelle 44 ist das Parksperrenbetätigungsglied 19 derart angeordnet, dass das Parksperrenbetätigungsglied 19 durch Rotation der Parksperrenwelle 44 axial bewegbar ist. Hierfür ist vorgesehen, dass die Parksperrenwelle 44 mit einer hierauf aufgeschraubten Spindelmutter 45 zusammenwirkt. Die Spindelmutter 45 dient als axialer Anschlag beziehungsweise Stützfläche für das Betätigungsglied 19. Das Betätigungsglied 19 ist von der Feder 31 gegen die Spindelmutter 45 beziehungsweise in Richtung der Funktionsfläche 23 der Klinke 18 beaufschlagt.

Durch Antrieben des Zwischenrads 27 in einer ersten Drehrichtung r1 wird entsprechend der Stützring 32 um die Drehachse A12 und die hiervon angetriebene Spindelwelle 44 um die Wellenachse A44 in einer ersten Drehrichtung angetrieben. Hierdurch wird die auf der Spindelwelle 44 aufgeschraubte Spindelmutter 45, die drehfest in Führungsschlitzen der Hülse 26 drehfest gehalten ist, in Richtung Sperrklinke 18 bewegt. Das Betätigungsglied 19, das an der Spindelmutter 45 axial abgestützt ist, wird von der Feder 31 in Richtung Funktionsfläche 23 der Sperrklinke 18 verschoben. Die Sperrklinke 18 wird in Bezug auf die Drehachse A12 des Sperrenrads 17 nach radial innen beaufschlagt und greift mit dem Sperrenzahn 20 in eine Ausnehmung des Sperrenrads 17 ein. Die Parksperre 4 ist somit geschlossen.

Durch Drehen des Zwischenrads 27 in der entgegengesetzten zweiten Drehrichtung r2 wird die Spindelwelle 44 über den Stützring 32 entsprechend in umgekehrter Drehrichtung angetrieben, so dass die darauf aufgeschraubte Spindelmutter 45 von der Sperrklinke 18 weg bewegt wird. Das Betätigungsglied 19 wird entsprechend von der Funktionsfläche 23 der Sperrklinke 18 weg verschoben. Die Sperrklinke 18 wird freigegeben und kann - beaufschlagt durch die Feder 22 - nach radial außen schwenken. Die Parksperre 4 ist somit wieder geöffnet.

Der Freilaufmodus ist erreicht, in dem die Parksperre 4 und die Kupplung 3 beide geöffnet sind. Durch weiteres Drehen des Zwischenrads 27 in der zweiten Drehrichtung r2 wird dann die Kupplung 3 geschlossen, wobei die Parksperre 4 geöffnet bleibt.

Im Übrigen entspricht die vorliegende Ausführungsform hinsichtlich Aufbau und Funktionsweise den oben genannten Ausführungsformen, auf deren Beschreibung hinsichtlich weiterer Einzelheiten verwiesen wird.

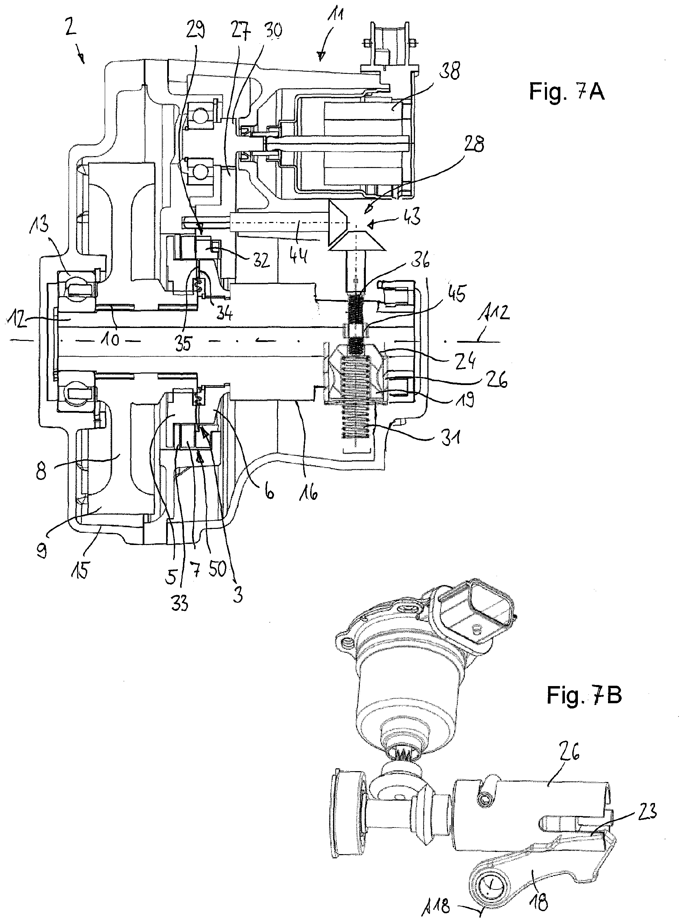

Die Figuren 7A und 7B, die nachstehend gemeinsam beschrieben werden, zeigen eine erfindungsgemäße Kupplungsanordnung 2 in einer weiteren Ausführungsform. Diese entspricht weitestgehend der Ausführungsform gemäß den Figuren 1 und 2, auf deren Beschreibung insofern Bezug genommen wird. Dabei sind gleiche beziehungsweise einander entsprechende Einzelheiten mit gleichen Bezugszeichen versehen wie in Figur 1.

Ein Unterschied besteht in der Ausgestaltung des ersten Kraftübertragungsmechanismus 28, der vorliegend einen Winkeltrieb 43 mit einer drehend antreibbaren Betätigungswelle 44 und einer hiermit antriebsverbundenen Parksperrenwelle 36 umfasst. Die Parksperrenwelle 44 ist in Form einer Spindelwelle gestaltet, auf der das Parksperrenbetätigungsglied 19 angeordnet ist, und zwar derart, dass das Parksperrenbetätigungsglied 19 durch Rotation der Parksperrenwelle 36 axial bewegbar ist. Hierfür ist vorgesehen, dass die Parksperrenwelle 36 mit einer hierauf aufgeschraubten Spindelmutter 45 zusammenwirkt. Die Spindelmutter 45 dient als axialer Anschlag beziehungsweise Stützfläche für das Betätigungsglied 19. Das Betätigungsglied 19 ist von der Feder 31 gegen die Spindelmutter 45 beziehungsweise in Richtung der Funktionsfläche 23 der Klinke 17 beaufschlagt.

Durch Drehen des Zwischenrads 27, beziehungsweise der hiermit drehfest verbundenen Betätigungswelle 36 in der ersten Drehrichtung wird die Spindelwelle 44 über den Winkeltrieb 43 entsprechend angetrieben, so dass sich die darauf aufgeschraubte Spindelmutter 45 in Richtung Winkeltrieb 43 bewegt wird. Das Betätigungsglied 19 wird entsprechend freigegeben und von der Feder 31 in Richtung Funktionsfläche 23 der Sperrklinke 18 verschoben. Die Sperrklinke 18 wird in Bezug auf die Drehachse A12 des Sperrenrads 17 nach radial innen beaufschlagt und greift mit dem Sperrenzahn 20 in eine Ausnehmung des Sperrenrads 18 ein. Die Parksperre 4 ist somit geschlossen.

Durch Drehen des Zwischenrads 27, beziehungsweise der hiermit drehfest verbundenen Betätigungswelle 44 in der entgegengesetzten zweiten Drehrichtung r2 wird die Spindelwelle 36 über den Winkeltrieb 43 entsprechend in umgekehrter Drehrichtung angetrieben, so dass sich die darauf aufgeschraubte Spindelmutter 45 vom Winkeltrieb 43 weg bewegt wird. Das Betätigungsglied 19 wird entsprechend von der Funktionsfläche 23 der Sperrklinke 18 weg verschoben. Die Sperrklinke 18 wird freigegeben und kann - beaufschlagt durch die Feder 22 - nach radial außen schwenken. Die Parksperre 4 ist somit wieder geöffnet.

Im Übrigen entsprechen Aufbau und Funktionsweise im Wesentlichen dem zu den Figuren 1 und 2 beschriebenen Ausführungsbeispiel, insbesondere auch hinsichtlich der einstellbaren Betriebsmodi, auf deren Beschreibung insofern Bezug genommen wird.

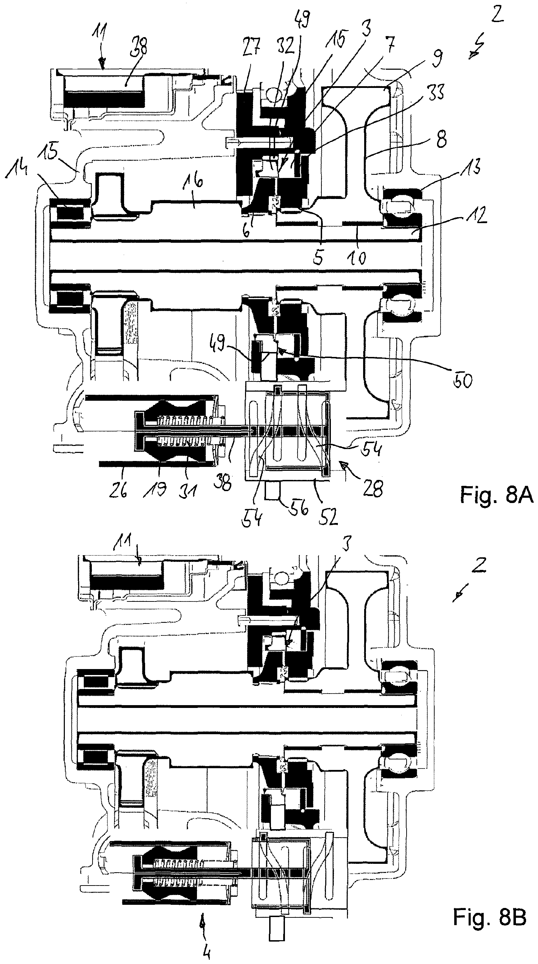

Die Figuren 8A und 8B, die nachstehend gemeinsam beschrieben werden, zeigen eine erfindungsgemäße Kupplungsanordnung 2 in einer weiteren Ausführungsform. Diese entspricht weitestgehend der Ausführungsform gemäß den Figuren 6A bis 6C, auf deren Beschreibung insofern Bezug genommen wird. Dabei sind gleiche beziehungsweise einander entsprechende Einzelheiten mit gleichen Bezugszeichen versehen wie in den Figuren 1 bis 6.

Der einzige Unterschied zur Ausführungsform nach Figur 6 besteht in der Ausgestaltung des Kraftübertragungsmechanismus 28 für die Parksperre 4. In der vorliegenden Ausführungsform nach Figur 8 umfasst der Kraftübertragungsmechanismus 28 eine Schaltwalze 52, die von dem drehend antreibbaren Stützring 32 drehbar ist. Hierfür hat die Schaltwalze 52 eine Außenverzahnung 53, die mit der Außenverzahnung 49 des Stützrings 32 in Eingriff ist. Die Schaltwalze 52 hat zwei diametral gegenüberliegende Stellkonturen 54, in die ein mit der Hülse 26 gekoppelter Zapfen 55 mit seinen Enden eingreift. Die Stellkonturen 54 der Schaltwalze 52 sind so gestaltet, dass eine Drehbewegung der Schaltwalze 52 in eine translatorische Bewegung des Zapfens 55 beziehungsweise des hiermit über eine Koppelstange 38 verbundenen Kupplungsbetätigungsglieds 19 umgewandelt wird.

Durch Antrieben des Zwischenrads 27 in einer ersten Drehrichtung r1 wird entsprechend der Stützring 32 um die Drehachse A12 und die hiervon angetriebene Schaltwalze 52 um die Walzenachse A52 in einer ersten Drehrichtung angetrieben. Hierdurch werden der in den Stellkonturen 54 geführte Zapfen 55 und die hiermit verbundene Koppelstange 38 in Richtung Sperrklinke 18 bewegt. Das Betätigungsglied 19, das auf der Koppelstange 38 mit Federvorspannung gehalten ist, wird in Richtung Funktionsfläche 23 der Sperrklinke 18 verschoben und beaufschlagt diese in Bezug auf die Drehachse A12 des Sperrenrads 17 nach radial innen. Der Sperrenzahn 20 der Sperrklinke 18 greift in eine Ausnehmung des Sperrenrads 17 ein. Die Parksperre 4 ist somit geschlossen; dieser Schaltzustand ist in Figur 8B gezeigt.

Durch Drehen des Zwischenrads 27 in der entgegengesetzten zweiten Drehrichtung r2 wird die Schaltwalze 52 über den Stützring 32 entsprechend in umgekehrter Drehrichtung angetrieben. Dabei werden der in den Stellkonturen 54 geführte Zapfen 55 und die hiermit verbundene Koppelstange 38 axial von der Sperrklinke 18 weg bewegt. Das Betätigungsglied 19 wird entsprechend von der Funktionsfläche 23 der Sperrklinke 18 weg verschoben. Die Sperrklinke 18 wird freigegeben und kann - beaufschlagt durch die Feder 22 - nach radial außen schwenken. Die Parksperre 4 ist somit wieder geöffnet; dieser Schaltzustand ist in Figur 8A gezeigt.

Der Freilaufmodus ist erreicht, in dem die Parksperre 4 und die Kupplung 3 beide geöffnet sind. Durch weiteres Drehen des Zwischenrads 27 in der zweiten Drehrichtung r2 wird dann die Kupplung 3 geschlossen, wobei die Parksperre 4 geöffnet bleibt. Im Übrigen entspricht die vorliegende Ausführungsform hinsichtlich Aufbau und Funktionsweise den oben genannten Ausführungsformen, auf deren Beschreibung hinsichtlich weiterer Einzelheiten verwiesen wird.

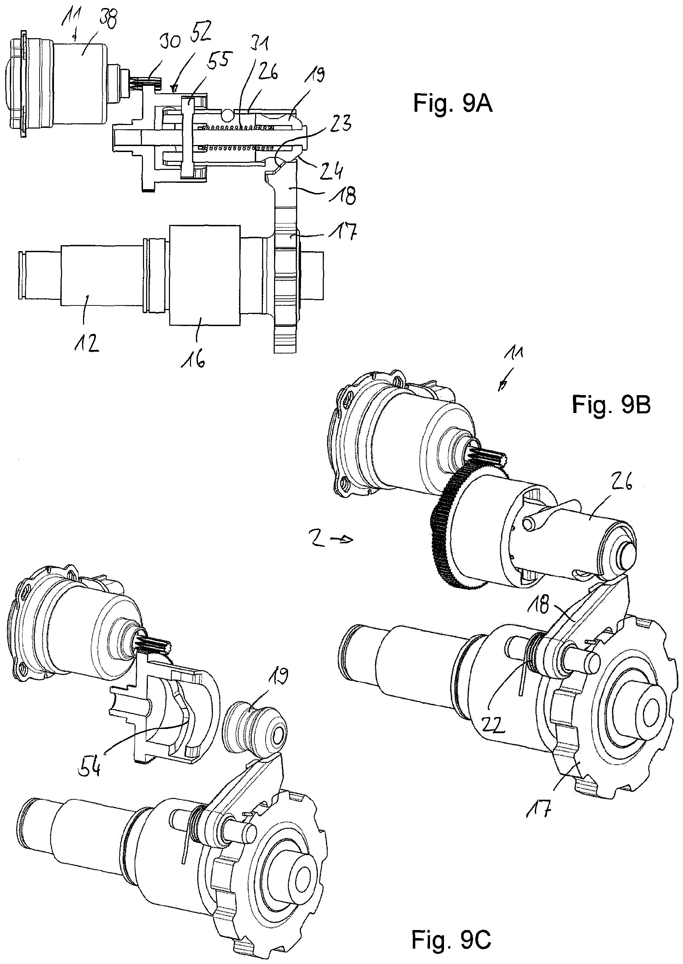

Die Figuren 9A bis 9C, die nachstehend gemeinsam beschrieben werden, zeigen einen Kraftübertragungsmechanismus 28 für die Aktuatoranordnung 2 aus Figur 8 in einer etwas abgewandelten Ausführungsform. Dabei sind gleiche beziehungsweise einander entsprechende Einzelheiten mit gleichen Bezugszeichen versehen wie Figur 8. Zur Veranschaulichung des drehbaren Antriebs der Schaltwalze 52 ist hier ein Elektromotor 38 eingezeichnet, welcher nur repräsentativ für den Verzahnungseingriff der Schaltwalze 52 mit der Außenverzahnung 49 des drehend antreibbaren Stützrads 32 zu sehen ist. Der einzige Unterschied zur Ausführungsform nach Figur 8 besteht in der Ausgestaltung der Schaltwalze 52, welche vorliegend nur ein Paar von Stellkonturen 54 aufweist, in die der mit der Koppelstange 38 verbundene Zapfen 55 mit seinen Enden eingreift. Die Stellkonturen 54 der Schaltwalze 52 sind so gestaltet, dass eine Drehbewegung der Schaltwalze 52 in eine translatorische Bewegung des Zapfens 55 beziehungsweise des hiermit über eine Koppelstange 38 verbundenen Kupplungsbetätigungsglieds 19 umgewandelt wird. Im Übrigen entspricht die vorliegende Ausführungsform hinsichtlich Aufbau und Funktionsweise der obigen Ausführungsform nach Figur 8, auf deren Beschreibung hinsichtlich weiterer Einzelheiten insofern verwiesen wird.

Bei den Ausführungsformen gemäß den Figuren 8 und 9 haben die Schaltwalzen 52 jeweils innenliegende Stellkonturen 54, in die ein innerhalb der Schaltwalze angeordneter Zapfen 55 eingreift. Es versteht sich, dass weitere abgewandelte Ausführungsformen möglich sind, insbesondere als kinematische Umkehr, das heißt mit einer Schaltwalze mit einer außenliegenden Stellkontur, in die ein außerhalb der Schaltwalze angeordneter stehender Zapfen eingreift. Im Übrigen ist die Kinematik, wie bei den Ausführungsformen gemäß den Figuren 8 und 9, das heißt eine Drehbewegung der Schaltwalze führt zu einer axialen Bewegung der Koppelstange 39 und des damit verbundenen Betätigungsglieds 19.

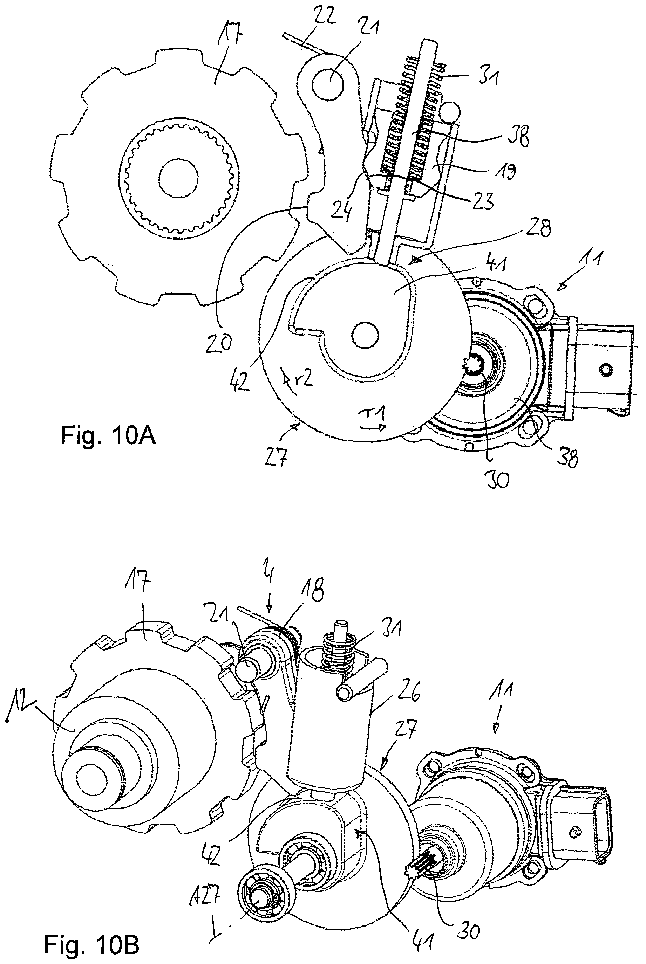

Die Figuren 10A und 10B, die nachstehend gemeinsam beschrieben werden, zeigen eine erfindungsgemäße Aktuatoranordnung 2 in einer weiteren Ausführungsform. Diese entspricht weitestgehend der Ausführungsform gemäß Figur 3, auf deren Beschreibung insofern Bezug genommen wird. Dabei sind gleiche beziehungsweise einander entsprechende Einzelheiten mit gleichen Bezugszeichen versehen wie in den vorstehend beschriebenen Figuren.

Es sind der Aktuator 11, das hiervon drehend antreibbare Stellrad 27 und die Parksperre 4 dargestellt. Das Stellrad 27 ist mit dem drehend antreibbaren Stützrad 32 zur Betätigung der Kupplung 3 in Eingriff zu bringen. Die Kupplung 3 kann so ausgestaltet sein, wie in Figur 3, ist vorliegend nicht dargestellt.

Die Parksperre 4 umfasst das Sperrenrad 17, das mit der Antriebswelle 12 drehfest verbunden ist, das Sperrelement 18, das mit dem Sperrenrad 17 zusammenwirkt und in dem ortsfesten Gehäuse 15 bewegbar aufgenommen ist, sowie das Parksperrenbetätigungsglied 19 zum Betätigen des Sperrelements 18. Das Sperrelement 18 ist in eine Sperrposition überführbar ist, in der es das Sperrenrad 17 blockiert, so dass die Antriebswelle 12 drehfest gehalten wird, und in eine Freigabeposition, in der das Sperrelement 18 das Sperrenrad 17 freigibt, so dass das Sperrenrad 17 und das damit verbundene Antriebswelle 12 frei drehen können. Das Sperrelement 18 ist als Sperrklinke gestaltet, die mittels des Lagerbolzens 21 in einem ortsfesten Bauteil um die Schwenkachse A21 schwenkbar gelagert ist. Zum Überführen der Sperrklinke 18 von der Sperrstellung in die Freigabestellung ist das Federelement 22 vorgesehen.

An ihrer vom Sperrenrad 17 wegweisenden Rückseite weist die Sperrklinke 18 außen eine Funktionsfläche 23 auf, die mit der Druckfläche 24 des Betätigungsglieds 19 zusammenwirkt. Dabei ist bei der vorliegenden Ausführungsform vorgesehen, dass die Bewegungsrichtung des Betätigungsglieds 19, das von der Feder 31 in Richtung Stellrad 27 beaufschlagt wird, die Drehachse A12 der Antriebswelle und die Schwenkachse A18 der Sperrklinke 18 senkrecht mit Abstand kreuzt. Die Funktionsfläche 23 der Sperrklinke 18 ist geneigt, so dass eine translatorische Bewegung des Betätigungsglieds 19 in eine Schwenkbewegung der Sperrklinke 18 umgesetzt wird. Das Betätigungsglied 19 hat eine konische Druckfläche 24, weswegen es auch als Konus bezeichnet werden kann. Zur Führung und Abstützung des Betätigungsglieds 19 ist die Führungshülse 26 vorgesehen, in der das Betätigungsglied 19 axial beweglich geführt ist.

Die Betätigung der Kupplung 3 und der Parksperre 4 erfolgt mittels des steuerbaren Aktuators 11, der vorliegend als elektromotorischer Aktuator gestaltet ist. Die Motorwelle 30 des Elektromotors ist mit dem Stellglied 27 in Eingriff und kann dieses in eine erste Drehrichtung oder eine entgegengesetzte zweite Drehrichtung drehen. Das Stellglied ist mit dem Kupplungsbetätigungsglied 7 (nicht dargestellt) und mit dem Parksperrenbetätigungsglied 19 wirkverbunden. Die Wirkverbindung ist derart, dass bei drehendem Antrieb in der ersten Drehrichtung r1 die Parksperre 4 geschlossen wird (Parkmodus) und bei drehendem Antrieb in der zweiten Drehrichtung r2 die Kupplung 3 geschlossen wird (Antriebsmodus). In einer Zwischenstellung des Stellglieds 27 sind die Kupplung 3 und die Parksperre 4 geöffnet (Freilaufmodus). Das Stellglied 27 ist über den ersten Kraftübertragungsmechanismus 28 mit dem Parksperrenbetätigungsglied 19 wirkverbunden.

Das Stellglied 27 ist bei der vorliegenden Ausführungsform in Form eines kombinierten Rampen-Zahnrads gestaltet, das in einem ortsfesten Gehäuse um eine Drehachse A27 drehbar gelagert ist. Das Rampen-Zahnrad 27 hat eine Außenverzahnung, in die das Antriebsritzel 30 des Elektromotors 38 zur Drehmomentübertragung eingreift, und überträgt die Drehbewegung auf den ersten beziehungsweise zweiten Kraftübertragungsmechanismus 28, 29.

Vorliegend weist der erste Kraftübertragungsmechanismus 28 eine Rampenanordnung 42 mit einer spiralförmig um die Drehachse A27 verlaufenden Stellkontur auf. Die Stellkontur wirkt mit einer Koppelstange 38 zusammen, die mit einem stirnseitigen Ende an der Stellkontur abgestützt ist. Auf der Koppelstange 38 ist das Betätigungsglied 19 axial beweglich gehalten und von der Feder 31 gegen einen Anschlag beaufschlagt. Die Stellkontur der Rampenanordnung 42 ist so gestaltet, dass durch Drehen des Rampen-Zahnrads 27 in der ersten Drehrichtung r1 die Koppelstange 38, die an der Stellkontur abgestützt ist, und das hieran abgestützte Betätigungsglied 19 von der Feder 31 in Richtung zur Drehachse A27 beaufschlagt werden. Dementsprechend wird das Betätigungsglied 19 mit seiner Konusfläche 24 auf die Funktionsfläche 23 der Sperrklinke 18 verschoben, so dass diese nach radial innen verschwenkt wird und der Sperrenzahn 20 in eine Zahnlücke des Sperrenrads 17 eingreift.

Durch Drehen des Rampen-Zahnrads 27 in die entgegengesetzte zweite Drehrichtung r2 wird die Koppelstange 38 und das damit verbundene Betätigungsglied 19 von der Rampen-Stellkontur nach radial außen bewegt. Das Betätigungsglied 19 gibt die Sperrklinke 18 entsprechend frei, die von der Feder 22 nach außen geschwenkt wird. Diese Freigabestellung ist in den Figuren 10A und 10B gezeigt. Im Übrigen entsprechen Aufbau und Funktionsweise im Wesentlichen den obigen Ausführungsbeispielen, insbesondere auch hinsichtlich der einstellbaren Betriebsmodi, auf deren Beschreibung insofern Bezug genommen wird.

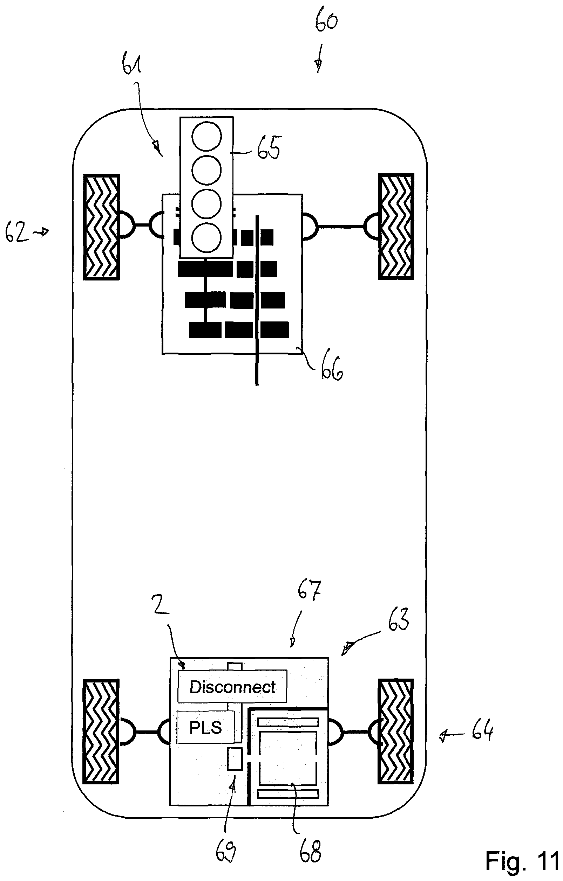

Figur 11 zeigt eine mechanische Antriebstranganordnung 60 eines Kraftfahrzeugs. Die Antriebsstranganordnung 60 umfasst einen ersten Antriebsstrang 61 mit einer ersten Antriebsachse 62 und einen zweiten Antriebsstrang 63 mit einer zweiten Antriebsachse 64. Die beiden Antriebsstränge 61, 63 sind vorliegend mechanisch voneinander getrennt. Der erste Antriebsstrang 61 ist von einer ersten Antriebseinheit 65 antreibbar, die insbesondere in Form einer Brennkraftmaschine gestaltet ist, wobei auch eine andere Antriebsquelle wie eine elektrische Maschine denkbar wäre. Der ersten Antriebseinheit 65 kann ein Schaltgetriebe 66 nachgelagert sein, mit dem das Motormoment in ein Antriebsmoment beziehungsweise die Motordrehzahl in eine Antriebsdrehzahl umgewandelt wird. Der zweite Antriebsstrang 63 umfasst einen Elektroantrieb 67, der von einer zweiten Antriebseinheit 68 in Form einer elektrischen Maschine antreibbar ist.

Der Elektroantrieb 67 umfasst ein dem Elektromotor 68 nachgelagertes Untersetzungsgetriebe 69, sowie eine dem Untersetzungsgetriebe nachgelagerte Leistungsverzweigungseinheit, welche das eingeleitete Drehmoment auf die beiden Seitenwellen 70, 71 verteilt. Der Elektroantrieb 67 umfasst ferner eine erfindungsgemäße Aktuatoranordnung 2 mit Kupplung 3, die im Leistungspfad zwischen der elektrischen Maschine 68 und der Leistungsverzweigungseinheit angeordnet ist und der Parksperre 4, die auf ein Antriebsbauteil im Leistungspfad einwirken kann, um dieses zu sperren oder freizugeben. Die Aktuatoranordnung 2 kann nach einer der oben beschriebenen Ausführungsformen gemäß den Figuren 1 bis 10 gestaltet sein.

### Bezugszeichenliste

- 2: Aktuatoranordnung
- 3: Kupplung
- 4: Parksperre
- 5: Kupplungseingangsteil
- 6: Kupplungsausgangsteil
- 7: Kupplungsbetätigungsglied
- 8: Antriebsteil
- 9: Antriebsrad
- 10: Lagermittel
- 11: Aktuator
- 12: Antriebswelle
- 13: Lagermittel
- 14: Lagermittel
- 15: Gehäuse
- 16: Abtriebsrad
- 17: Sperrenrad
- 18: Sperrelement
- 19: Parksperrenbetätigungsglied
- 20: Sperrzahn
- 21: Lagerbolzen
- 22: Federelement
- 23: Funktionsfläche
- 24: Druckfläche
- 25: Betätigungsglied
- 26: Führungshülse
- 27: Aktuator-Stellglied
- 28: Kraftübertragungsmechanismus
- 29: Kraftübertragungsmechanismus
- 30: Antriebsritzel
- 31: Feder
- 32: Stützring
- 33: Axiallager
- 34: Eingriffsmittel
- 35: Eingriffsmittel
- 36: Spindelwelle
- 37: Spindelhülse
- 38: Elektromotor
- 39: Antriebsritzel
- 40: Ende
- 41: Konturelement
- 42: Rampenanordnung
- 43: Winkeltrieb
- 44: Parksperrenwelle
- 45: Spindelmutter
- 46: Übertragungselement
- 47: Zahnstange
- 48: Antriebsrad
- 49: Außenverzahnung
- 50: Rampenanordnung
- 51: Welle
- 52: Schaltwalze
- 53: Außenverzahnung
- 54: Stellkonturen
- 55: Zapfen
- 56: Antriebsrad
- 57 58 59 60: Antriebstranganordnung
- 61: erster Antriebsstrang
- 62: erste Antriebsachse
- 63: zweiter Antriebsstrang
- 64: zweite Antriebsachse
- 65: erste Antriebseinheit
- 66: Schaltgetriebe
- 67: Elektroantrieb
- 68: zweite Antriebseinheit
- 69: Untersetzungsgetriebe
- 70: Seitenwelle
- 71: Seitenwelle

- A: Achse
- C: Position (Kupplung)
- P: Position (Parksperre)
- r: Richtung
- S: Stellposition

## Patentansprüche

1. Aktuatoranordnung zum Betätigen einer Kupplung und einer Parksperre in einem Antriebsstrang eines Kraftfahrzeugs, die Aktuatoranordnung umfassend:
eine Kupplung (3) mit einem drehend antreibbaren Kupplungseingangsteil (5), einem Kupplungsausgangsteil (6) und einem Kupplungsbetätigungsglied (7), das ausgestaltet ist, um das Kupplungseingangsteil (5) und das Kupplungsausgangsteil (6) miteinander antriebsmäßig zu verbinden oder voneinander zu trennen;
eine Parksperre (4) mit einem Sperrenrad (17), das mit einer Antriebswelle (12) drehfest verbunden ist, die mit dem Kupplungsausgangsteil (6) antriebsverbunden ist, einem Sperrelement (18), das mit dem Sperrenrad (17) zusammenwirkt und in eine Sperrposition überführbar ist, in der das Sperrelement (18) das Sperrenrad (17) blockiert, und in eine Freigabeposition, in der das Sperrelement (18) das Sperrenrad (17) freigibt, und einem Parksperrenbetätigungsglied (19) zum Betätigen des Sperrelements (18);
einen steuerbaren Aktuator (11) mit einem bewegbaren Aktuator-Stellglied (27), das in mindestens drei Stellpositionen (S1, S2, S0) überführbar ist und mit dem Kupplungsbetätigungsglied (7) und mit dem Parksperrenbetätigungsglied (19) wirkverbunden ist, derart, dass in einer ersten Stellposition (S1) die Parksperre (4) geschlossen ist, in einer zweiten Stellposition (S2) die Parksperre (4) geöffnet und die Kupplung (3) geschlossen ist, und in einer dritten Stellposition (S0) die Kupplung (3) und die Parksperre (4) geöffnet sind,
**dadurch gekennzeichnet, dass** das Aktuator-Stellglied (27) eine Verzahnung aufweist, die mit einem drehend antreibbaren Ring (32) zum Betätigen der Kupplung (3) in Eingriff ist.

2. Aktuatoranordnung nach Anspruch 1,
**dadurch gekennzeichnet,**
**dass** in der ersten Stellposition (S1) des Aktuator-Stellglieds (27) die Kupplung (3) geöffnet oder geschlossen ist.

3. Aktuatoranordnung nach einem der Ansprüche 1 oder 2,
**dadurch gekennzeichnet,**
**dass** das Aktuator-Stellglied (27) über einen ersten Kraftübertragungsmechanismus (28) mit dem Parksperrenbetätigungsglied (19) verbunden ist und über einen zweiten Kraftübertragungsmechanismus (29) mit dem Kupplungsbetätigungsglied (7) verbunden ist.

4. Aktuatoranordnung nach einem der Ansprüche 1 bis 3,
**dadurch gekennzeichnet,**
**dass** der Aktuator (11) einen Drehantrieb (38) aufweist, der das Aktuator-Stellglied (27) in eine erste Drehrichtung (r1) und in eine entgegengesetzte zweite Drehrichtung (r2) drehend antreiben kann.

5. Aktuatoranordnung nach einem der Ansprüche 3 oder 4 wenn vom Anspruch 3 abhängig,
**dadurch gekennzeichnet,**
**dass** das Parksperrenbetätigungsglied (19) von dem ersten Kraftübertragungsmechanismus (28) über einen ersten Stellweg zum Betätigen der Parksperre (4) bewegbar ist, und das Kupplungsbetätigungsglied (7) von dem zweiten Kraftübertragungsmechanismus (29) über einen zweiten Stellweg zum Betätigen der Kupplung (3) bewegbar ist, wobei der erste und der zweite Stellweg so aufeinander abgestimmt und gestaltet sind, dass bei Betätigung einer von den Einheiten Kupplung und Parksperre (3, 4) die jeweils andere Einheit (4, 3) in einer stabilen Position gehalten wird.

6. Aktuatoranordnung nach einem der Ansprüche 3 oder 5,
**dadurch gekennzeichnet,**
**dass** der erste Kraftübertragungsmechanismus (28) einen Spindeltrieb mit einer drehend antreibbaren Spindelwelle (36) und einer hiermit verbundenen Spindelhülse (37) sowie eine Koppelstange (38) umfasst, wobei die Spindelhülse (37) einen Schlitz mit einer Steigungskomponente aufweist, in welcher die Koppelstange (38) mit einem ersten Ende geführt ist, und wobei ein zweites Ende der Koppelstange (38) mit dem Parksperrenbetätigungsglied (19) verbunden ist, so dass eine axiale Bewegung der Spindelhülse (37) zumindest mittelbar eine Verschiebebewegung des Parksperrenbetätigungsglied (19) bewirkt.

7. Aktuatoranordnung nach einem der Ansprüche 3 oder 5,
**dadurch gekennzeichnet,**
**dass** der erste Kraftübertragungsmechanismus (28) ein Konturelement (41) mit einer Stellkontur (42) umfasst, die ausgestaltet ist, eine Drehbewegung des Aktuator-Stellglieds (27) in eine translatorische Bewegung des Parksperrenbetätigungsglieds (19) umzuwandeln,
wobei das Konturelement (41) des ersten Kraftübertragungsmechanismus (28) mit dem Aktuator-Stellglied (27) verbunden oder über eine Zwischenwelle (51) antriebsverbunden ist.

8. Aktuatoranordnung nach einem der Ansprüche 3 oder 5,
**dadurch gekennzeichnet,**
**dass** der erste Kraftübertragungsmechanismus (28) eine Stellhülse (52) umfasst, die von dem drehend antreibbaren Glied (32) des zweiten Kraftübertragungsmechanismus (29) drehend antreibbar ist, und ein mit dem Parksperrenbetätigungsglied (19) verbundenes Koppelelement (38) aufweist, wobei eines von den beiden Teilen Stellhülse und Koppelelement (52, 38) eine Stellkontur (41) aufweist, die mit einer Gegenkontur von dem anderen der beiden Teile (38, 52) derart zusammenwirkt, dass eine Drehbewegung der Stellhülse (52) eine Verschiebebewegung des Parksperrenbetätigungsglieds (19) bewirkt.

9. Aktuatoranordnung nach einem der Ansprüche 3 oder 5,
**dadurch gekennzeichnet,**
**dass** der erste Kraftübertragungsmechanismus (28) eine Koppelstange (38) aufweist, gegen die das Parksperrenbetätigungsglied (19) zumindest mittelbar abgestützt ist, wobei die Koppelstange (38) mittels einer Feder (31) in Richtung einer Stellkontur (42) beaufschlagt und gegen diese abgestützt ist, wobei die Stellkontur (42) so gestaltet ist, dass durch Drehen des Aktuator-Stellglieds (27) die Koppelstange (38) in Bezug auf die Drehachse (A27) des Aktuator-Stellglieds (27) radial bewegt wird.

10. Aktuatoranordnung nach einem der Ansprüche 1 bis 9,
**dadurch gekennzeichnet,**
**dass** ein elastisch vorgespanntes Fixierelement vorgesehen ist, um das Aktuator-Stellglied (27) in zumindest einer Stellposition zu fixieren.

11. Aktuatoranordnung nach einem der Ansprüche 3 oder 5 bis 9,
**dadurch gekennzeichnet,**
**dass** der zweite Kraftübertragungsmechanismus (29) eine Rampenanordnung (50) umfasst, welche ausgestaltet ist, eine Drehbewegung des Aktuator-Stellglieds (27) in eine translatorische Bewegung des Kupplungsbetätigungsglieds (7) umzuwandeln,
wobei die Rampenanordnung (50) einen Stützring (32) aufweist, der gegenüber einem ortsfesten Bauteil axial abgestützt ist, und einen Stellring (7), der gegenüber dem Stützring (32) axial verschiebbar ist, wobei der Stellring das Kupplungsbetätigungsglied (7) bildet.

12. Aktuatoranordnung nach einem der Ansprüche 1 bis 11,
**dadurch gekennzeichnet,**
**dass** ein Positionssensor vorgesehen ist, das ausgestaltet ist, um eine die Position des Aktuator-Stellglied (27) repräsentierende Messgröße zu erfassen.

13. Aktuatoranordnung nach einem der Ansprüche 1 bis 12,
**dadurch gekennzeichnet,**
**dass** zwischen dem Kupplungseingangsteil (5) und dem Kupplungsausgangsteil (6) eine Rückstellfeder vorgesehen ist, welche die Kupplung (3) im Schließsinn beaufschlagt.

14. Elektroantriebsanordnung zum Antreiben eines Kraftfahrzeugs, umfassend:
eine elektrische Maschine (68) mit einer Motorwelle;
ein Untersetzungsgetriebe (69), das ausgestaltet ist, um ein von der Motorwelle eingeleitetes Drehmoment ins Langsame zu übersetzen;
eine Leistungsverzweigungseinheit mit einem Eingangsteil und zwei Ausgangsteilen, die ausgestaltet ist, um eine vom Untersetzungsgetriebe (69) in das Eingangsteil eingeleitete Drehbewegung auf die zwei Ausgangsteile zu übertragen;
**gekennzeichnet durch** eine Aktuatoranordnung (2) nach einem der Ansprüche 1 bis 13, die in einem Leistungspfad des Untersetzungsgetriebes (69) angeordnet ist.

## Claims

1. Actuator arrangement for operating a clutch and a parking lock in a driveline of a motor vehicle, comprising:
a clutch (3) having a rotatably drivable clutch input part (5), a clutch output part (6) and a clutch actuating member (7) configured to drivingly connect or disconnect the clutch input part (5) and the clutch output part (6) to or from each other;
a parking lock (4) with a ratchet wheel (17) which is connected in a rotationally fixed manner to a drive shaft (12) drivingly connected to the clutch output part (6), a locking element (18) which cooperates with the ratchet wheel (17) and is movable into a locking position in which the locking element (18) locks the ratchet wheel (17), and into a release position in which the locking element (18) releases the ratchet wheel (17), and a parking lock actuating member (19) for actuating the locking element (18);
a controllable actuator (11) with a movable actuator setting member (27) which is transferable into at least three setting positions (S1, S2, S0) and is operatively connected to the clutch actuating member (7) and to the parking lock actuating member (19) such, that in a first setting position (S1) the parking lock (4) is closed, in a second setting position (S2) the parking lock (4) is open and the clutch (3) is closed, and in a third setting position (S0) the clutch (3) and the parking lock (4) are open,
**characterized in that** that the actuator setting member (27) has a toothing which engages a rotatingly drivable ring (32) for actuating the clutch (3).

2. Actuator arrangement according to claim 1,
**characterized in**
**that** the clutch (3) is open or closed in the first setting position (S1) of the actuator setting member (27).

3. Actuator arrangement according to any of claims 1 or 2,
**characterized in**
**that** the actuator setting member (27) is connected to the parking lock actuating member (19) via a first force transmission mechanism (28) and is connected to the clutch actuating member (7) via a second force transmission mechanism (29).

4. Actuator arrangement according to any of claims 1 to 3,
**characterized in**
**that** the actuator (11) comprises a rotary drive (38) which can rotatably drive the actuator setting member (27) in a first direction of rotation (r1) and in an opposite second direction of rotation (r2).

5. Actuator arrangement according to any of claims 3 or 4, if dependent from claim 3,
**characterized in**
**that** the parking lock actuating member (19) is movable by the first force transmission mechanism (28) along a first travel path for actuating the parking lock (4), and the clutch actuating member (7) is movable by the second force transmission mechanism (29) along a second travel path for actuating the clutch (3), wherein the first and the second travel paths are matched to each other and configured such that when one of the units clutch and parking lock (3, 4) is actuated, the respective other unit (4, 3) is held in a stable position.

6. Actuator arrangement according to any of claims 3 or 5,
**characterized in**
**that** the first force transmission mechanism (28) comprises a spindle drive with a rotationally drivable spindle shaft (36) and a spindle sleeve (37) connected thereto, and a coupling rod (38), wherein the spindle sleeve (37) has a slot with a gradient component, in which slot the coupling rod (38) is guided with a first end, and wherein a second end of the coupling rod (38) is connected to the parking lock actuating member (19), so that an axial movement of the spindle sleeve (37) at least indirectly causes a shifting movement of the parking lock actuating member (19).

7. Actuator arrangement according to any of claims 3 or 5,
**characterized in**
**that** the first force transmission mechanism (28) comprises a contour element (41) with a setting contour (42) which is configured to convert a rotational movement of the actuator setting member (27) into a translatory movement of the parking lock actuating member (19), wherein the contour element (41) of the first force transmission mechanism (28) is connected to the actuator setting member (27) or drivingly connected to the actuator setting member (27) via an intermediate shaft (51).

8. Actuator arrangement according to any of claims 3 or 5,
**characterized in**
**that** the first force transmission mechanism (28) comprises a setting sleeve (52) that is rotatably drivable by the rotatably drivable member (32) of the second force transmission mechanism (29), and a coupling element (38) connected to the parking lock actuating member (19), wherein one of the two parts, setting sleeve and coupling element (52, 38), has a setting contour (41) which interacts with a counter contour of the other one of the two parts (38, 52) such that a rotary movement of the setting sleeve (52) causes a shifting movement of the parking lock actuating member (19).

9. Actuator arrangement according to any of claims 3 or 5,
**characterized in**
**that** the first force transmission mechanism (28) has a coupling rod (38), against which the parking lock actuating member (19) is at least indirectly supported, wherein the coupling rod (38) is loaded by a spring (31) in the direction of the setting contour (42) and is supported thereagainst, wherein the setting contour (42) is configured such that by rotating the actuator setting member (27) the coupling rod (38) is moved radially with respect to the axis of rotation (A27) of the actuator setting member (27).

10. Actuator arrangement according to any of claims 1 to 9,
**characterized in**
**that** an elastically pretensioned fixing element is provided in order to fix the actuator setting member (27) in at least one setting position.

11. Actuator arrangement according to any of claims 3 or 5 to 9,
**characterized in**
**that** the second force transmission mechanism (29) comprises a ramp arrangement (50) which is configured to convert a rotary movement of the actuator setting member (27) into a translatory movement of the clutch actuating member (7),
wherein the ramp arrangement (50) has a support ring (32), which is axially supported against a stationary component, and a setting ring (7), which is axially displaceable with respect to the support ring (32), wherein the setting ring forms the clutch actuating member (7).

12. Actuator arrangement according to any of claims 1 to11,
**characterized in**
**that** a position sensor is provided which is configured to detect a measured value representing the position of the actuator setting member (27).

13. Actuator arrangement according to any of claims 1 to12,
**characterized in**
**that** a return spring is provided between the clutch input part (5) and the clutch output part (6), which spring loads the clutch (3) in the closing direction.

14. An electric drive assembly for driving a motor vehicle, comprising:
an electric machine (68) with a motor shaft;
a reduction gearing (69) configured to transmit a torque introduced by the motor shaft to a slow speed;
a power distribution unit having an input part and two output parts, which is configured to transmit a rotary motion introduced into the input part by the reduction gearing (69) to the two output parts;
**characterized by** an actuator arrangement (2) according to any of claims 1 to 13, which is arranged in a power path of the reduction gearing (69).

## Revendications

1. Agencement d'actionneur pour actionner un embrayage et un verrou de stationnement dans une chaîne cinématique d'un véhicule automobile, l'agencement d'actionneur comprenant:
un embrayage (3) avec une partie d'entrée d'embrayage (5) pouvant être entraînée en rotation, une partie de sortie d'embrayage (6) et un organe d'actionnement d'embrayage (7) qui est conçu pour relier ou séparer par entraînement la partie d'entrée d'embrayage (5) et la partie de sortie d'embrayage (6) l'une de l'autre;
un verrou de stationnement (4) avec une roue de blocage (17) qui est reliée de manière solidaire en rotation à un arbre d'entraînement (12) qui est relié en entraînement à la partie de sortie d'embrayage (6), un élément de blocage (18) qui coopère avec la roue de blocage (17) et qui peut être amené dans une position de blocage, dans laquelle l'élément de blocage (18) bloque la roue de blocage (17), et dans une position de libération dans laquelle l'élément de blocage (18) libère la roue de blocage (17), et un organe d'actionnement de verrou de stationnement (19) pour actionner l'élément de blocage (18) ;
un actionneur contrôlable (11) avec un élément de réglage (27) mobile de l'actionneur qui peut être amené dans au moins trois positions de réglage (S1, S2, S0) et qui est relié de manière opérationnelle à l'élément d'actionnement d'embrayage (7) et avec l'organe d'actionnement de verrou de stationnement (19), de telle sorte que dans une première position de réglage (S1), le verrou de stationnement (4) est fermé, dans une deuxième position de réglage (S2), le verrou de stationnement (4) est ouvert et l'embrayage (3) est fermé, et dans une troisième position de réglage (S0), l'embrayage (3) et le verrou de stationnement (4) sont ouverts,
**caractérisé en ce que** l'élément de réglage de l'actionneur (27) présente une denture qui s'engrène avec une bague (32) pouvant être entraînée en rotation pour actionner l'embrayage (3).

2. Agencement d'actionneur selon la revendication 1,
**caractérisé en ce**
**que**, dans la première position de réglage (S1) de l'élément de réglage d'actionneur (27), l'embrayage (3) est ouvert ou fermé.

3. Agencement d'actionneur selon l'une des revendications 1 ou 2,
**caractérisé en ce**
**que** l'élément de réglage d'actionneur (27) est relié à l'organe d'actionnement de verrou de stationnement (19) par un premier mécanisme de transmission de force (28) et est relié à l'organe d'actionnement d'embrayage (7) par un deuxième mécanisme de transmission de force (29).

4. Agencement d'actionneur selon l'une quelconque des revendications 1 à 3,
**caractérisé en ce**
**que** l'actionneur (11) présente un entraînement rotatif (38) qui peut entraîner en rotation l'élément de réglage d'actionneur (27) dans un premier sens de rotation (r1) et dans un deuxième sens de rotation (r2) opposé.

5. Agencement d'actionneur selon l'une des revendications 3 ou 4, si elle dépend de la revendication 3,
**caractérisé en ce**
**que** l'élément d'actionnement du verrou de stationnement (19) peut être déplacé par le premier mécanisme de transmission de force (28) sur une première course de réglage pour actionner le verrou de stationnement (4), et l'organe d'actionnement de l'embrayage (7) peut être déplacé par le deuxième mécanisme de transmission de force (29) sur une deuxième course de réglage pour actionner l'embrayage (3), la première et la deuxième course de réglage étant adaptées l'une à l'autre et conçues de telle sorte que, lors de l'actionnement de l'une des unités embrayage et verrou de stationnement (3, 4), l'autre unité respective (4, 3) est maintenue dans une position stable.

6. Agencement d'actionneur selon l'une quelconque des revendications 3 ou 5,
**caractérisé en ce**
**que** le premier mécanisme de transmission de force (28) comprend un entraînement à broche avec un arbre de broche (36) pouvant être entraîné en rotation et un manchon de broche (37) relié à celui-ci ainsi qu'une barre de couplage (38), le manchon de broche (37) présentant une fente avec une composante de pente, dans laquelle la barre d'accouplement (38) est guidée par une première extrémité, et une deuxième extrémité de la barre d'accouplement (38) étant reliée à l'organe d'actionnement du verrou de stationnement (19), de sorte qu'un mouvement axial de la douille de broche (37) provoque au moins indirectement un mouvement de translation de l'organe d'actionnement du verrou de stationnement (19).

7. Agencement d'actionneur selon l'une quelconque des revendications 3 ou 5,
**caractérisé en ce**
**que** le premier mécanisme de transmission de force (28) comprend un élément de contour (41) avec un contour de réglage (42) qui est conçu pour convertir un mouvement de rotation de l'organe de réglage d'actionneur (27) en un mouvement de translation de l'organe d'actionnement de verrou de stationnement (19),
dans lequel l'élément de contour (41) du premier mécanisme de transmission de force (28) est relié l'élément de réglage de l'actionneur (27) ou est relié en entraînement par un arbre intermédiaire (51).

8. Agencement d'actionneur selon l'une quelconque des revendications 3 ou 5,
**caractérisé en ce**
**que** le premier mécanisme de transmission de force (28) comprend un manchon de réglage (52) qui peut être entraîné en rotation par l'élément (32) pouvant être entraîné en rotation du deuxième mécanisme de transmission de force (29), et un élément de couplage (38) relié à L'organe d'actionnement de verrou de stationnement (19), l'une des deux parties, douille de réglage et élément de couplage (52, 38), présente un contour de réglage (41) qui coopère avec un contour opposé de l'autre des deux parties (38, 52) de telle sorte qu'un mouvement de rotation de la douille de réglage (52) provoque un mouvement de translation de l'organe d'actionnement du verrou de stationnement (19).

9. Agencement d'actionneur selon l'une quelconque des revendications 3 ou 5,
**caractérisé en ce**
**que** le premier mécanisme de transmission de force (28) présente une barre d'accouplement (38) contre laquelle l'organe d'actionnement du verrou de stationnement (19) est soutenu au moins indirectement, la barre d'accouplement (38) étant sollicitée au moyen d'un ressort (31) en direction d'un contour de réglage (42) et étant soutenue contre celui-ci, le contour de réglage (42) étant conçu de telle sorte que, par rotation de l'organe de réglage de l'actionneur (27), la barre d'accouplement (38) est déplacée radialement par rapport à l'axe de rotation (A27) de l'organe de réglage de l'actionneur (27).

10. Agencement d'actionneur selon l'une quelconque des revendications 1 à 9,
**caractérisé en ce**
**qu'**un élément de fixation précontraint élastiquement est prévu pour fixer l'organe de réglage d'actionneur (27) dans au moins une position de réglage.

11. Agencement d'actionneur selon l'une quelconque des revendications 3 ou 5 à 9,
**caractérisé en ce**
**que** le deuxième mécanisme de transmission de force (29) comprend un agencement de rampe (50) qui est configuré pour convertir un mouvement de rotation de l'élément de réglage de l'actionneur (27) en un mouvement de translation de l'organe d'actionnement d'embrayage (7),
dans lequel l'ensemble de rampe (50) comprend une bague de support (32) qui est supportée axialement par rapport à un composant fixe, et une bague de réglage (7) qui peut être déplacée axialement par rapport à la bague de support (32), la bague de réglage formant l'organe d'actionnement d'embrayage (7).

12. Agencement d'actionneur selon l'une quelconque des revendications 1 à 11,
**caractérisé en ce**
**qu'**il est prévu un capteur de position qui est conçu pour détecter une grandeur de mesure représentant la position de l'organe de réglage d'actionneur (27).

13. Agencement d'actionneur selon l'une quelconque des revendications 1 à 12,
**caractérisé en ce**
**qu'**il est prévu entre la partie d'entrée d'embrayage (5) et la partie de sortie d'embrayage (6) un ressort de rappel qui sollicite l'embrayage (3) dans le sens de la fermeture.

14. Dispositif de propulsion électrique pour l'entraînement d'un véhicule automobile, comprenant :
une machine électrique (68) avec un arbre moteur ;
un réducteur de vitesse (69) qui est conçu pour traduire en vitesse lente un couple introduit par l'arbre du moteur ;
une unité de dérivation de puissance avec une partie d'entrée et deux parties de sortie, qui est conçue pour transmettre aux deux parties de sortie un mouvement de rotation introduit dans la partie d'entrée par le réducteur de vitesse (69) ;
**caractérisé par** un agencement d'actionneurs (2) selon l'une quelconque des revendications 1 à 13, qui est disposé dans un trajet de puissance du réducteur (69).
